# EUROPEAN PATENT APPLICATION

(11) **EP 2 594 398 A1**
(43) Date of publication of application: **22.05.2013**
(21) Application number: 11806498.9
(22) Date of filing: 14.07.2011
(51) Int. Cl.: B32B 27/18, B65D 65/40, B65D 81/26

(54) **LAMINATED FILM AND PACKAGE**

(30) Priority: 08.09.2010 JP 2010200478; 04.08.2010 JP 2010175330; 22.07.2010 JP 2010165358; 16.07.2010 JP 2010161334
(71) Applicant: Sumitomo Bakelite Co., Ltd., Shinagawa-ku Tokyo 140-0002 (JP)
(72) Inventor: MARUMO, Tsuyoshi, Tokyo 140-0002 (JP); SASAKI, Kenta, Tokyo 140-0002 (JP)
(74) Representative: Müller-Boré & Partner Patentanwälte
(86) International application number: PCT/JP2011/004037
(87) International publication number: WO 2012/008165

(57) **Abstract**

An object of the present invention is to provide a laminated film excellent in oxygen absorbing ability. A laminated film 100 according to the present invention includes an oxygen-absorbing layer 150, a first adjacent layer 140 and a second adjacent layer 160. The oxygen-absorbing layer 150 contains an oxygen absorber and an oxygen absorption reaction catalyst. The first adjacent layer 140 is laminated in contact with one of the surfaces of the oxygen-absorbing layer 150. The second adjacent layer 160 is laminated in contact with the other surface of the oxygen-absorbing layer 150. The content of the oxygen absorption reaction catalyst is 100 ppm to 5000 ppm inclusive in terms of the weight ratio with respect to the oxygen-absorbing layer 150. The total content of an oxidation inhibitor of the first adjacent layer 140 and an oxidation inhibitor of the second adjacent layer 160 is 800 ppm or less in terms of the weight ratio with respect to the total amount of the two layers (the first adjacent layer 140 and the second adjacent layer 160).

## Description

### TECHNICAL FIELD

The present invention relates to a laminated film and a package.

### BACKGROUND ART

Traditionally, plastic containers are used as packaging containers for storing foods, drinks and the like. When foods, drinks and the like are wrapped with the plastic container, there is a concern that oxygen remains in the plastic container. The plastic container is inferior in oxygen barrier property to a metal container and a glass container. Thus, oxygen easily permeates into the plastic container from outside. Oxygen in the plastic container oxidizes contents, i.e. foods and drinks, to be degenerated.

For the problem caused by oxygen in the plastic container, for example, Patent Document 1 discloses an oxygen-absorbing multilayer laminate including an oxygen-absorbing layer that contains an oxygen-absorbing resin and does not contain an oxygen absorption reaction catalyst, wherein a layer adjacent to the oxygen-absorbing layer is selected from the group consisting of an oxygen barrier layer, a thermoplastic resin layer and an adhesive layer.

### PRIOR ART DOCUMENT

### PATENT DOCUMENT

Patent Document 1: Japanese Patent Laid-Open Publication No. 2009-12443

### SUMMARY OF THE INVENTION

### PROBLEM TO BE SOLVED BY THE INVENTION

A plastic container including the oxygen-absorbing multilayer laminate described in Patent Document 1 can absorb oxygen in the plastic container by an oxygen-absorbing layer. However, the oxygen-absorbing multilayer laminate is required to have a still higher oxygen absorbing ability.

An object of the present invention is to provide a laminated film and a package that are excellent in oxygen absorbing ability.

### MEANS FOR SOLVING THE PROBLEM

(1)
   A laminated film according to the present invention includes an oxygen-absorbing layer, a first adjacent layer and a second adjacent layer. The oxygen-absorbing layer contains an oxygen absorber and an oxygen absorption reaction catalyst. The first adjacent layer is laminated in contact with one of the surfaces of the oxygen-absorbing layer. The second adjacent layer is laminated in contact with the other surface of the oxygen-absorbing layer. The content of the oxygen absorption reaction catalyst is 100 ppm to 5000 ppm inclusive in terms of the weight ratio with respect to the oxygen-absorbing layer. The total content of an oxidation inhibitor of the first adjacent layer and an oxidation inhibitor of the second adjacent layer is 800 ppm or less in terms of the weight ratio with respect to the total amount of the two layers (the first adjacent layer and the second adjacent layer).

The oxygen absorption of the laminated film is increased by ensuring that the content of the oxygen absorption reaction catalyst is 100 ppm to 5000 ppm inclusive in terms of the weight ratio with respect to the oxygen-absorbing layer and the total content of the oxidation inhibitor of the first adjacent layer and the oxidation inhibitor of the second adjacent layer is 800 ppm or less in terms of the weight ratio with respect to the total amount of the two layers (the first adjacent layer and the second adjacent layer). Thus, the laminated film is excellent in oxygen absorbing ability.

(2)
   In the laminated film according to (1), the content of the oxidation inhibitor of the oxygen-absorbing layer is preferably 170 ppm or less in terms of the weight ratio with respect to the oxygen-absorbing layer.

The oxygen absorption of the laminated film is increased by ensuring that the content of the oxidation inhibitor of the oxygen-absorbing layer is 170 ppm or less in terms of the weight ratio with respect to the oxygen-absorbing layer. Thus, the laminated film is further excellent in oxygen absorbing ability.

(3)
   The laminated film according to (1) or (2) preferably further includes a barrier layer. The barrier layer has a gas barrier property. The first adjacent layer is an adhesive layer. The adhesive layer bonds the barrier layer and the oxygen-absorbing layer together. The second adjacent layer is a seal layer.

The barrier layer having a gas barrier property can reduce an oxygen transmission rate. Thus, the barrier layer can reduce the amount of oxygen to be absorbed per unit time by the oxygen-absorbing layer. Therefore, the oxygen-absorbing layer can retain the oxygen absorbing ability for a long time.

(4)
   The laminated film according to the present invention includes an oxygen-absorbing layer and a barrier layer. The oxygen-absorbing layer contains an oxygen absorber and an oxygen absorption reaction catalyst. The barrier layer has a gas barrier property. The oxygen absorption reaction catalyst is contained in an amount of 100 ppm to 5000 ppm inclusive in terms of the weight ratio with respect to the oxygen-absorbing layer. Further, the oxygen-absorbing layer contains an oxidation inhibitor contained in an amount of 0 ppm to 170 ppm inclusive in terms of the weight ratio with respect to the oxygen-absorbing layer. That is, the oxygen-absorbing layer may or may not contain an oxidation inhibitor.

The oxygen absorption of the laminated film is increased and deterioration of the appearance of the laminated film is suppressed by making the oxygen-absorbing layer contain an oxygen absorption reaction catalyst in an amount of 100 ppm to 5000 ppm inclusive in terms of the weight ratio with respect to the oxygen-absorbing layer and making the oxygen-absorbing layer contain an oxidation inhibitor in an amount of 0 ppm to 170 ppm inclusive in terms of the weight ratio with respect to the oxygen-absorbing layer. Thus, the laminated film is excellent in oxygen absorbing ability. Further, when the oxygen-absorbing layer contains an oxidation inhibitor, the laminated film can be effectively prevented, by the oxidation inhibitor, from being oxidized to be degraded while retaining the above-mentioned effect.

(5)
   In the laminated film according to (4), the barrier layer preferably has an oxygen transmission of 200 ml/(m²·24h·atm) or less.

When a barrier layer having an oxygen transmission of 200 ml/(m²·24h·atm) or less is used in the laminated film according to the present invention, the above-mentioned effect is easily exhibited.

(6)
   In the laminated film according to (4) or (5), the oxygen absorption reaction catalyst is preferably contained in an amount of 500 ppm to 5000 ppm inclusive in terms of the weight ratio with respect to the oxygen-absorbing layer. The oxidation inhibitor is contained in an amount of 0 ppm to 120 ppm inclusive in terms of the weight ratio with respect to the oxygen-absorbing layer.

The oxygen absorption of the laminated film in an initial stage (on the first day after storage is started in a hermetically sealed state) is increased and deterioration of the appearance of the laminated film is suppressed by making the oxygen-absorbing layer contain an oxygen absorption reaction catalyst in an amount of 500 ppm to 5000 ppm inclusive in terms of the weight ratio with respect to the oxygen-absorbing layer and making the oxygen-absorbing layer contain an oxidation inhibitor in an amount of 0 ppm to 120 ppm inclusive in terms of the weight ratio with respect to the oxygen-absorbing layer. When the oxygen-absorbing layer contains an oxidation inhibitor, the laminated film can be effectively prevented, by the oxidation inhibitor, from being oxidized to be degraded while retaining the above-mentioned effect.

(7)
   In the laminated film according to (6), the oxidation inhibitor is preferably contained in an amount of 5 ppm to 60 ppm inclusive in terms of the weight ratio with respect to the oxygen-absorbing layer.

By making the oxygen-absorbing layer contain an oxidation inhibitor in an amount of 5 ppm to 60 ppm inclusive in terms of the weight ratio with respect to the oxygen-absorbing layer, the oxygen absorption of the laminated film on the third and seventh days after storage is started in a hermetically sealed state is increased, and deterioration of the appearance of the laminated film and degradation by oxidation are suppressed.

(8)
   In the laminated film according to (7), the oxygen absorption reaction catalyst is preferably contained in an amount of 3000 ppm to 5000 ppm inclusive in terms of the weight ratio with respect to the oxygen-absorbing layer.

By making the oxygen-absorbing layer contain an oxygen absorption reaction catalyst in an amount of 3000 ppm to 5000 ppm inclusive in terms of the weight ratio with respect to the oxygen-absorbing layer, the oxygen absorption of the laminated film on the third and seventh days after storage is started in a hermetically sealed state is increased, and deterioration of the appearance of the laminated film and degradation by oxidation are suppressed.

(9)
   In the laminated film according to any of (1) to (8), the oxygen absorber is preferably made of an oxygen-absorbing resin.

The oxygen absorber is made of an oxygen-absorbing resin. The oxygen-absorbing resin does not make the oxygen-absorbing layer tinged with a specific color unlike an oxygen absorber such as an iron powder. Thus, the oxygen-absorbing resin can impart transparency to the oxygen-absorbing layer.

(10)
   A package according to the present invention includes the laminated film according to any of (1) to (9).

The package includes the above-mentioned laminated film. Thus, the package is excellent in oxygen absorbing ability.

(11)
   The package according to the present invention includes a cap material and a bottom material. The cap material is sealed to the bottom material. At least one of the cap material and the bottom material is made of a film that absorbs oxygen. In the package, the oxygen concentration value in the package decreases to a range of 0% to 50% inclusive of the initial oxygen concentration value in the package at the time when the cap material is sealed to the bottom material, and thereafter changes within a range of 0% to 50% inclusive of the initial oxygen concentration value.

The oxygen concentration value in the package decreases to a range of 0% to 50% inclusive of the initial oxygen concentration value in the package at the time when the cap material is sealed to the bottom material. After the oxygen concentration value decreases, the oxygen concentration value in the package changes within a range of 0% to 50% inclusive of the initial oxygen concentration value. Therefore, the package is excellent in oxygen absorbing ability, and can maintain an oxygen concentration lower than the initial oxygen concentration.

(12)
   In the package according to (11), the oxygen concentration value in the package preferably decreases to a range of 0% to 50% inclusive of the initial oxygen concentration value in the package at the elapse of 10 days after the cap material is sealed to the bottom material.

The oxygen concentration value in the package decreases to a range of 0% to 50% inclusive of the initial oxygen concentration value in the package at the elapse of 10 days after the cap material is sealed to the bottom material. Therefore, the package is excellent in rate of absorbing oxygen.

(13)
   In the package according to (11) or (12), the oxygen concentration value in the package preferably changes within a range of 0% to 50% inclusive of the initial oxygen concentration value in the package for 20 days or more.

The oxygen concentration value in the package preferably changes within a range of 0% to 50% inclusive of the initial oxygen concentration value for 20 days or more. Therefore, the package can maintain an oxygen concentration lower than the initial oxygen concentration for 20 days or more.

(14)
   In the package according to (13), the oxygen concentration value in the package preferably changes within a range of 0% to 50% inclusive of the initial oxygen concentration value in the package for 30 days or more.

The oxygen concentration value in the package preferably changes within a range of 0% to 50% inclusive of the initial oxygen concentration value for 30 days or more. Therefore, the package can maintain an oxygen concentration lower than the initial oxygen concentration for 30 days or more.

(15)
   In the package according to any of (11) to (14), the oxygen concentration value in the package preferably decreases to a range of 0% to 20% inclusive of the initial oxygen concentration value in the package, and thereafter changes within a range of 0% to 20% inclusive of the initial oxygen concentration value.

The oxygen concentration value in the package decreases to a range of 0% to 20% inclusive of the initial oxygen concentration value in the package at the time when the cap material is sealed to the bottom material. After the oxygen concentration value decreases, the oxygen concentration value in the package changes within a range of 0% to 20% inclusive of the initial oxygen concentration value. Therefore, the package is further excellent in oxygen absorbing ability.

(16)
   In the package according to (15), the oxygen concentration in the package preferably decreases to a value of 0% to 20% inclusive of the initial oxygen concentration in the package at the elapse of 10 days after the cap material is sealed to the bottom material.

The oxygen concentration in the package decreases to a value of 0% to 20% inclusive of the initial oxygen concentration in the package at the elapse of 10 days after the cap material is sealed to the bottom material. Therefore, the package is further excellent in rate of absorbing oxygen.

(17)
   The package according to any of (11) to (16) preferably absorbs oxygen in the package under an environment of 5°C.

The package absorbs oxygen in the package under an environment of 5°C. Thus, even when the package is stored at a low temperature of 5°C, the package can absorb oxygen.

### EFFECTS OF THE INVENTION

A laminated film and a package according to the present invention are excellent in oxygen absorbing ability.

### BRIEF DESCRIPTION OF THE DRAWINGS

Fig. 1 is a sectional view of a laminated film according to one embodiment of the present invention.
Fig. 2 is a sectional view of a package including the laminated film.
Fig. 3 is an enlarged view of part A of the package shown in Fig. 2.
Fig. 4 is a sectional view of a state of measuring an oxygen absorption in the package by a trace oxygen analyzer for food.
Fig. 5 is a view showing a change in oxygen concentration in a pocket of a package according to Example 57.
Fig. 6 is a view showing a change in oxygen concentration in a pocket of a package according to Example 58.
Fig. 7 is a view showing a change in oxygen concentration in a pocket of a package according to Example 59.
Fig. 8 is a view showing a change in oxygen concentration in a pocket of a package according to Example 60.
Fig. 9 is a view showing a change in oxygen concentration in a pocket of a package according to Comparative Example 13.

### DESCRIPTION OF REFERENCE NUMERALS

| | |
|---|---|
| 100 | laminated film |
| 110 | outer layer |
| 120 | first adhesive layer |
| 130 | barrier layer |
| 140 | second adhesive layer (first adjacent layer, adhesive layer) |
| 150 | oxygen-absorbing layer |
| 160 | seal layer (second adjacent layer) |
| 200 | package |
| 300 | bottom material |
| 310 | pocket |
| 400 | cap material |
| 500 | trace oxygen analyzer for food |
| 510 | needle |
| 520 | adhesive rubber |

### MODES FOR CARRYING OUT THE INVENTION

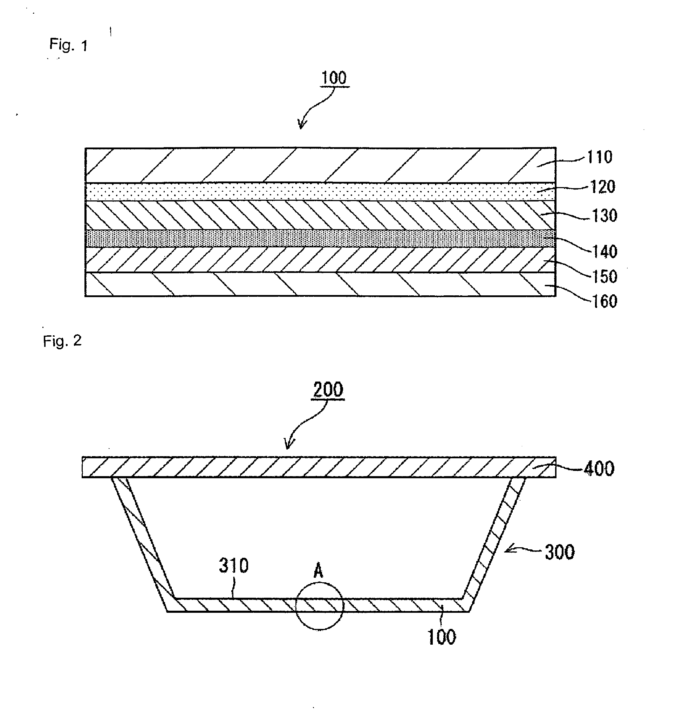

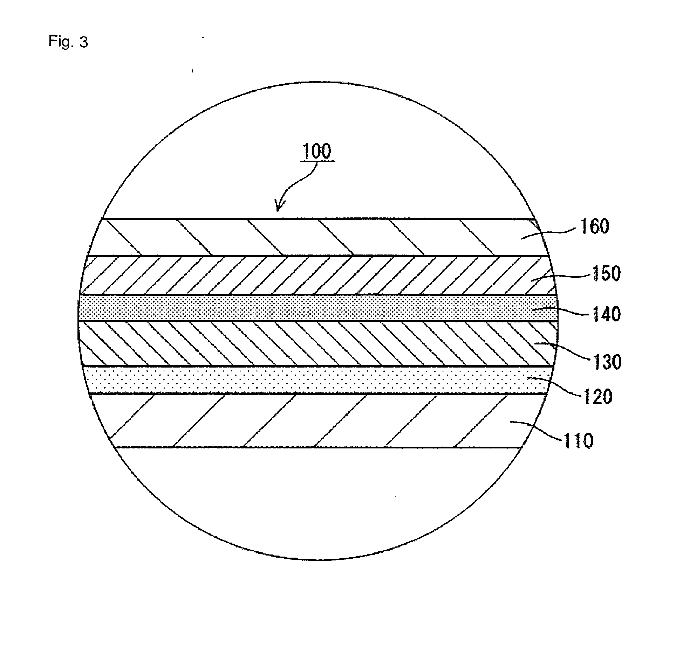

As shown in Fig. 1, a laminated film 100 according to this embodiment principally includes an outer layer 110, a first adhesive layer 120, a barrier layer 130, a second adhesive layer 140 which is a first adjacent layer, an oxygen-absorbing layer 150, and a seal layer 160 which is a second adjacent layer. The outer layer 110, the first adhesive layer 120, the barrier layer 130, the second adhesive layer 140, the oxygen-absorbing layer 150 and the seal layer 160 are laminated in this order. As shown in Figs. 2 and 3, the laminated film 100 is used for a bottom material 300 of a package 200. Hereinbelow, each structure of the laminated film 100 will be described in detail.

### <Outer layer>

As a material of the outer layer 110, one having such a strength that it can be used for the bottom material 300, for example, a polyester-based resin, is used. The outer layer 110 made of a polyester-based resin has good rigidity. The laminated film 100 including the outer layer 110 made of a polyester-based resin has good transparency and good surface glossiness. Thus, the package 200 is excellent in appearance and texture.

As a polyester-based resin used for the outer layer 110, a saturated polyester resin is used. The saturated polyester resin is obtained from a divalent acid such as terephthalic acid or a derivative thereof having an ester forming ability as an acid component and a glycol having 2 to 10 carbon atoms, any other dihydric alcohol or a derivative thereof having an ester forming ability as a glycol component. Specifically, as the polyester-based resin, a polyalkylene terephthalate resin such as a polyethylene terephthalate resin, a polybutylene terephthalate resin, a polytrimethylene terephthalate resin or a polyhexamethylene terephthalate resin, a copolymerized polyester resin, or the like is used.

### <First adhesive layer and second adhesive layer>

As a material of the first adhesive layer 120 and the second adhesive layer 140, a publicly known adhesive resin, for example, an adhesive polyolefin-based resin, is used. Specifically, as a material of the first adhesive layer 120 and the second adhesive layer 140, for example, an ethylene-methacrylate-glycidyl acrylate terpolymer, or one obtained by grafting a monobasic unsaturated fatty acid, a dibasic unsaturated fatty acid or an anhydride thereof to various kinds of polyolefins (maleic acid grafted ethylene-vinyl acetate copolymer, maleic acid grafted ethylene-α-olefin copolymer, etc.) is used. Examples of monobasic unsaturated fatty acid include acrylic acid and methacrylic acid. Examples of dibasic unsaturated fatty acid include maleic acid, fumaric acid and itaconic acid.

The first adhesive layer 120 and the second adhesive layer 140 may or may not contain an oxidation inhibitor. When the first adhesive layer 120 and the second adhesive layer 140 contain an oxidation inhibitor, a publicly known oxidation inhibitor, for example, a hindered phenol-based oxidation inhibitor, a phosphorus-based oxidation inhibitor, a thioether-based oxidation inhibitor and the like are used alone or in mixture of two or more thereof as the oxidation inhibitor. The content of the oxidation inhibitor in the second adhesive layer 140 will be described later.

### <Barrier layer>

The barrier layer 130 limits transmission of oxygen entering from outside the package 200. As a material of the barrier layer 130, a publicly known material having an oxygen barrier property, for example, a polyvinyl alcohol resin, an ethylene-vinyl alcohol copolymer resin (hereinafter, referred to as "EVOH resin"), a polyvinylidene chloride resin, a polyamide resin having an aromatic ring in a diamine component, or the like is used. The EVOH resin is obtained by, for example, saponifying an ethylene-vinyl acetate copolymer. The barrier layer 130 has an oxygen transmission of preferably 200 ml/(m²·24h·atm) or less, more preferably 10 ml/(m²·24h·atm) or less, further preferably 1 ml/(m²·24h·atm) or less.

### <Oxygen-absorbing layer>

The oxygen-absorbing layer 150 contains an oxygen-absorbing resin which is an oxygen absorber, and an oxygen absorption reaction catalyst. As the oxygen-absorbing resin, an unsaturated polyolefin-based oxygen-absorbing resin or the like is used. Specifically, as the oxygen-absorbing resin, for example, an ethylene-based unsaturated hydrocarbon polymer, a main-chain ethylene-based unsaturated hydrocarbon polymer, a polyether unit polymer, a copolymer of ethylene and a strained cyclic alkylene, a polyamide resin, an acid-modified polybutadiene, a hydroxyaldehyde polymer or the like is used alone, or in mixture with a base resin, which does not affect the transparency, other than an oxygen-absorbing resin.

As the oxygen absorption reaction catalyst, a transition metal catalyst such as zinc stearate, cobalt stearate, cobalt naphthenate, zinc naphthenate, zinc acetylacetonate, cobalt acetylacetonate or copper acetylacetonate, or the like is used. The content of the oxygen absorption reaction catalyst is 100 ppm to 5000 ppm inclusive in terms of the weight ratio with respect to the oxygen-absorbing layer 150. Particularly, the content of the oxygen absorption reaction catalyst is preferably 500 ppm to 5000 ppm inclusive in terms of the weight ratio with respect to the oxygen-absorbing layer 150, more preferably 1000 ppm to 5000 ppm inclusive in terms of the weight ratio with respect to the oxygen-absorbing layer 150, further preferably 3000 ppm to 5000 ppm inclusive in terms of the weight ratio with respect to the oxygen-absorbing layer 150, most preferably 3500 ppm to 5000 ppm inclusive in terms of the weight ratio with respect to the oxygen-absorbing layer 150.

The oxygen-absorbing layer 150 may or may not contain an oxidation inhibitor. When the oxygen-absorbing layer 150 contains an oxidation inhibitor, a publicly known oxidation inhibitor is used as the oxidation inhibitor, and for example, a hindered phenol-based oxidation inhibitor, a phosphorus-based oxidation inhibitor, a thioether-based oxidation inhibitor and the like are used alone or in mixture of two or more thereof. The content of the oxidation inhibitor in the oxygen-absorbing layer 150 is preferably 0 ppm to 170 ppm inclusive in terms of the weight ratio with respect to the oxygen-absorbing layer 150. Particularly, the content of the oxidation inhibitor in the oxygen-absorbing layer 150 is preferably 0 ppm to 120 ppm inclusive in terms of the weight ratio with respect to the oxygen-absorbing layer 150, more preferably 5 ppm to 120 ppm inclusive in terms of the weight ratio with respect to the oxygen-absorbing layer 150, further preferably 5 ppm to 60 ppm inclusive in terms of the weight ratio with respect to the oxygen-absorbing layer 150, most preferably 35 ppm to 60 ppm inclusive in terms of the weight ratio with respect to the oxygen-absorbing layer 150.

### <Seal layer>

The seal layer 160 has a sealing function for sealing (heat-sealing, ultrasonic-sealing, radiofrequency-sealing, impulse-sealing, etc.) a cap material 400 to the bottom material 300, and does not adversely affect contents contained in the package 200. As a material of the seal layer 160, a low density polyethylene (LDPE) resin, a linear low density polyethylene (LLDPE) resin, a medium density polyethylene (MDPE) resin, a high density polyethylene (HDPE) resin, a polypropylene (PP) resin, an ethylene-vinyl acetate copolymer (EVA) resin, an ethylene-methyl methacrylate copolymer (EMMA) resin, an ethylene-ethyl acrylate copolymer (EEA) resin, an ethylene-methyl acrylate copolymer (EMA) resin, an ethylene-ethyl acrylate-maleic anhydride copolymer (E-EA-MAH) resin, an ethylene-acrylate copolymer (EAA) resin, an ethylene-methacrylic acid copolymer (EMAA) resin, an ionomer (ION) resin and the like are used alone or in mixture of two or more thereof.

The seal layer 160 may or may not contain an oxidation inhibitor. When the seal layer 160 contains an oxidation inhibitor, a publicly known oxidation inhibitor, for example, a hindered phenol-based oxidation inhibitor, a phosphorus-based oxidation inhibitor, a thioether-based oxidation inhibitor and the like are used alone or in mixture of two or more thereof as the oxidation inhibitor. The content of the oxidation inhibitor in the seal layer 160 will be described later.

### <Content of oxidation inhibitor in second adhesive layer and seal layer>

The total content of the oxidation inhibitor of the second adhesive layer 140 and the oxidation inhibitor of the seal layer 160 is 0 ppm to 800 ppm inclusive in terms of the weight ratio with respect to the total amount of two layers, i.e. the second adhesive layer 140 and the seal layer 160. The total content of the oxidation inhibitor of the second adhesive layer 140 and the oxidation inhibitor of the seal layer 160 is preferably 0 ppm to 400 ppm inclusive, more preferably 0 ppm to 200 ppm inclusive in terms of the weight ratio with respect to the total amount of two layers, i.e. the second adhesive layer 140 and the seal layer 160.

### <Package>

As shown in Figs. 2 and 3, the package 200 is composed of the bottom material 300 and the cap material 400. The bottom material 300 is made of the laminated film 100 with a pocket 310 molded such that the outer layer 110 is at the outer side and the seal layer 160 is at the inner side (see Fig. 3).

As a material of the cap material 400, for example, a biaxially oriented polypropylene film (OPP film), a biaxially stretched polyethylene terephthalate film coated with a metal oxide by vapor deposition (VM-PET film), a film obtained by laminating a polyethylene resin, or the like is used. Contents (not shown) such as a food, a drink or an industrial component (particularly electronic component) are stored in the pocket 310 of the bottom material 300 which is internally evacuated. After contents are stored in the pocket 310, the cap material 400 is sealed to the bottom material 300, so that the pocket 310 of the bottom material 300 is hermetically sealed.

### <Effects in this embodiment>

The oxygen absorption of the laminated film 100 is increased by ensuring that the content of the oxygen absorption reaction catalyst is 100 ppm to 5000 ppm inclusive in terms of the weight ratio with respect to the oxygen-absorbing layer 150 and the total content of the oxidation inhibitor of the second adhesive layer 140 and the oxidation inhibitor of the seal layer 160 is 800 ppm or less in terms of the weight ratio with respect to the total amount of the two layers (the second adhesive layer 140 and the seal layer 160). Thus, the laminated film 100 is excellent in oxygen absorbing ability.

The oxygen absorption of the laminated film 100 is increased by ensuring that the content of the oxidation inhibitor of the oxygen-absorbing layer 150 is 170 ppm or less in terms of the weight ratio with respect to the oxygen-absorbing layer 150. Thus, the laminated film 100 is further excellent in oxygen absorbing ability.

The barrier layer 130 having a gas barrier property can reduce an oxygen transmission rate. Thus, the barrier layer 130 can reduce the amount of oxygen to be absorbed per unit time by the oxygen-absorbing layer 150. Therefore, the oxygen-absorbing layer 150 can retain the oxygen absorbing ability for a long time.

The oxygen absorption of the laminated film 100 is increased and deterioration of the appearance of the laminated film 100 is suppressed by making the oxygen-absorbing layer 150 contain an oxygen absorption reaction catalyst in an amount of 100 ppm to 5000 ppm inclusive in terms of the weight ratio with respect to the oxygen-absorbing layer 150 and making the oxygen-absorbing layer 150 contain an oxidation inhibitor in an amount of 0 ppm to 170 ppm inclusive in terms of the weight ratio with respect to the oxygen-absorbing layer 150. Thus, the laminated film 100 is excellent in oxygen absorbing ability. Further, when the oxygen-absorbing layer 150 contains an oxidation inhibitor, the laminated film 100 can be effectively prevented, by the oxidation inhibitor, from being oxidized to be degraded while retaining the above-mentioned effect.

When the barrier layer 130 having an oxygen transmission of 200 ml/(m²·24h·atm) or less is used in the laminated film 100 according to the present invention, the above-mentioned effect is easily exhibited.

The oxygen absorption of the laminated film 100 in an initial stage (on the first day after storage is started in a hermetically sealed state) is increased and deterioration of the appearance of the laminated film 100 is suppressed by making the oxygen-absorbing layer 150 contain an oxygen absorption reaction catalyst in an amount of 500 ppm to 5000 ppm inclusive in terms of the weight ratio with respect to the oxygen-absorbing layer 150 and making the oxygen-absorbing layer 150 contain an oxidation inhibitor in an amount of 0 ppm to 120 ppm inclusive in terms of the weight ratio with respect to the oxygen-absorbing layer 150. When the oxygen-absorbing layer 150 contains an oxidation inhibitor, the laminated film 100 can be effectively prevented, by the oxidation inhibitor, from being oxidized to be degraded while retaining the above-mentioned effect.

By making the oxygen-absorbing layer 150 contain an oxidation inhibitor in an amount of 5 ppm to 60 ppm inclusive in terms of the weight ratio with respect to the oxygen-absorbing layer 150, the oxygen absorption of the laminated film 100 on the third and seventh days after storage is started in a hermetically sealed state is increased, and deterioration of the appearance of the laminated film 100 and degradation by oxidation are suppressed.

By making the oxygen-absorbing layer 150 contain an oxygen absorption reaction catalyst in an amount of 3000 ppm to 5000 ppm inclusive in terms of the weight ratio with respect to the oxygen-absorbing layer 150, the oxygen absorption of the laminated film 100 on the third and seventh days after storage is started in a hermetically sealed state is increased, and deterioration of the appearance of the laminated film 100 and degradation by oxidation are suppressed.

The oxygen absorber is made of an oxygen-absorbing resin. The oxygen-absorbing resin does not make the oxygen-absorbing layer 150 tinged with a specific color unlike an oxygen absorber such as an iron powder. Thus, the oxygen-absorbing resin can impart transparency to the oxygen-absorbing layer 150.

The package 200 includes the laminated film 100. Thus, the package 200 is excellent in oxygen absorbing ability.

At the elapse of 2 days or more after the cap material 400 is sealed to the bottom material 300, the oxygen concentration value in the package 200 decreases to a range of 0% to 50% inclusive of the initial oxygen concentration value in the package 200. After the oxygen concentration value decreases, the oxygen concentration value in the package 200 changes within a range of 0% to 50% inclusive of the initial oxygen concentration value. Therefore, the package 200 is excellent in oxygen absorbing ability, and can maintain an oxygen concentration lower than the initial oxygen concentration.

At the elapse of 10 days after the cap material 400 is sealed to the bottom material 300, the oxygen concentration in the package 200 decreases to a value of 0% to 50% inclusive of the initial oxygen concentration in the package 200. Therefore, the package 200 is excellent in rate of absorbing oxygen.

The oxygen concentration value in the package 200 changes within a range of 0% to 50% inclusive of the initial oxygen concentration value for a time period after the elapse of 2 days and before the elapse of 38 days, namely for 20 days or more. Therefore, the package 200 can maintain an oxygen concentration lower than the initial oxygen concentration for 20 days or more.

The oxygen concentration value in the package 200 changes within a range of 0% to 50% inclusive of the initial oxygen concentration value for a time period after the elapse of 2 days and before the elapse of 38 days, namely for 30 days or more. Therefore, the package 200 can maintain an oxygen concentration lower than the initial oxygen concentration for 30 days or more.

At the elapse of 10 days or more after the cap material 400 is sealed to the bottom material, the oxygen concentration value in the package 200 decreases to a range of 0% to 20% inclusive of the initial oxygen concentration value in the package 200. After the oxygen concentration value decreases, the oxygen concentration value in the package 200 changes within a range of 0% to 20% inclusive of the initial oxygen concentration value. Therefore, the package 200 is further excellent in oxygen absorbing ability.

At the elapse of 10 days or more after the cap material 400 is sealed to the bottom material 300, the oxygen concentration in the package 200 decreases to a value of 0% to 20% inclusive of the initial oxygen concentration in the package 200. Therefore, the package 200 is further excellent in rate of absorbing oxygen.

Oxygen in the package 200 is absorbed under an environment of 5°C. Thus, even when the package 200 is stored at a low temperature of 5°C, the package 200 can absorb oxygen.

### <Variation>

(A)
   For the oxygen absorber, for example, an iron powder-based oxygen absorber mainly made of an iron powder may be used rather than an oxygen-absorbing resin. In this case, the iron powder-based oxygen absorber is added to a publicly known thermoplastic resin, for example, a polyolefin such as polyethylene, polypropylene, polybutadiene or polymethylpentene, an elastomer or a modified product thereof, or a mixed resin thereof before being used.

(B)
   The laminated film 100 may include a layer having no sealing function in place of the seal layer 160. For example, the layer having no sealing function is one that protects the oxygen-absorbing layer 150 so that contents stored in the package 200 do not directly contact the oxygen-absorbing layer 150, and does not adversely affect the contents. The laminated film 100 may lack at least one of the outer layer 110, the first adhesive layer 120, the second adhesive layer 140 and the seal layer 160 within the bounds of not impairing the spirit of the present invention.

(C)
   The laminated film 100 may be molded into the cap material 400, or may be molded into both the bottom material 300 and the cap material 400. In the package 200 containing the cap material 400 made of the laminated film 100, the seal layer 160 of the cap material 400 is placed opposite to the bottom material 300.

### EXAMPLES

Examples relating to a package 200 including a laminated film 100 according to the present invention, and comparative examples will now be described. The present invention is in no way limited to these examples.

### (Example 1)

### <Preparation of bottom material>

A copolymerized polyester resin (manufactured by Eastman Chemical Japan, Ltd.; Product number: GN 071) was prepared as a resin forming an outer layer 110. An adhesive polyolefin-based resin (manufactured by Mitsui Chemicals, Incorporated; Product number: SF 740) was prepared as a resin forming a first adhesive layer 120. An EVOH resin (manufactured by KURARAY CO., LTD.; Product number: J 171B) was prepared as a resin forming a barrier layer 130. An adhesive polyolefin-based resin (manufactured by Mitsui Chemicals, Incorporated; Product number: LF 308) was prepared as a resin forming a second adhesive layer 140. A product obtained by mixing 80% by weight of a base resin with 20% by weight of an unsaturated polyolefin-based oxygen-absorbing resin was prepared as a resin forming an oxygen-absorbing layer 150. A LDPE resin (manufactured by Ube-Maruzen Polyethylene Co, Ltd.; Product number: F 522N) was prepared as a resin forming a seal layer 160.

Cobalt stearate as an oxygen absorption reaction catalyst was added to the mixture of a base resin and an unsaturated polyolefin-based oxygen-absorbing resin of the oxygen-absorbing layer 150 such that the content of cobalt stearate was 1000 ppm in terms of the weight ratio with respect to the oxygen-absorbing resin 150. Further, a hindered phenol-based oxidation inhibitor (manufactured by BASF Ltd.; Product number: IRGANOX 1010) was added to the mixture of a base resin and an unsaturated polyolefin-based oxygen-absorbing resin of the oxygen-absorbing layer 150 such that the content of the hindered phenol-based oxidation inhibitor was 120 ppm in terms of the weight ratio with respect to the oxygen-absorbing resin 150. No oxidation inhibitor was added to the second adhesive layer 140 and the seal layer 160.

The LDPE resin of the seal layer 160, the mixture of a base resin and an unsaturated polyolefin-based oxygen-absorbing resin for the oxygen-absorbing layer 150, the adhesive polyolefin-based resin for the second adhesive layer 140, the EVOH resin for the barrier layer 130, the adhesive polyolefin-based resin for the first adhesive layer 120 and the copolymerized polyester resin for the outer layer 110 were co-extruded in this order to prepare a laminated film 100. In the obtained laminated film 100, the thickness of the seal layer 160 was 10 µm, the thickness of the oxygen-absorbing layer 150 was 30 µm, the thickness of the second adhesive layer 140 was 20 µm, the thickness of the barrier layer 130 was 40 µm, the thickness of the first adhesive layer 120 was 20 µm and the thickness of the outer layer 110 was 90 µm.

Using a deep drawing type fully automatic vacuum packaging machine (manufactured by MULTIVAC; Product number: R-530), a pocket 310 (longer side: 160 mm × shorter side: 105 mm × depth: 1.5 mm; surface area in pocket: 240 cm²) was molded in the laminated film 100 under conditions of molding temperature: 95°C and molding time: 3 seconds to prepare a bottom material 300.

### <Preparation of cap material>

A LLDPE resin (manufactured by Prime Polymer Co., Ltd.; Product number: ULT-ZEX 2022L) was formed into a film by a T-die extrusion process to obtain a LLDPE film having a thickness of 30 µm. The LLDPE film, a biaxially oriented polypropylene film (OPP film) having a thickness of 30 µm and a biaxially stretched polyethylene terephthalate film (VM-PET film) coated with aluminum by vapor deposition and having a thickness of 12 µm were laminated together by a dry lamination process to prepare a cap material 400 as a multilayer film.

### <Preparation of package>

The bottom material 300 and the cap material 400 were hermetically heat-sealed to each other at 135°C for 1.5 seconds without internally evacuating the pocket 310, so that a package 200 was prepared. The volume of the package 200 was 250 cm ³

### <Measurement of oxygen absorption>

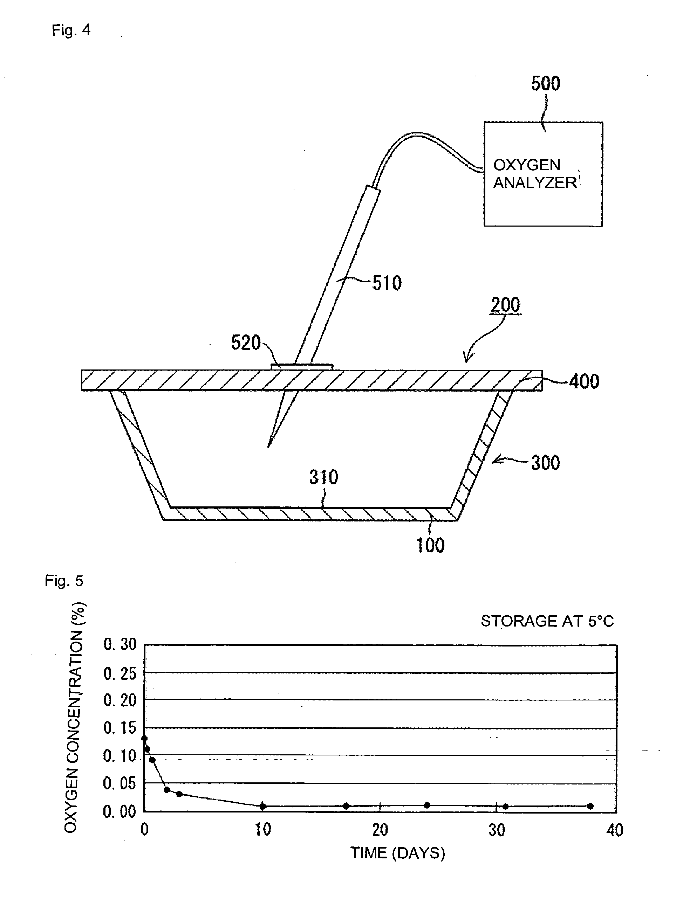

As shown in Fig. 4, a trace oxygen analyzer for food 500 (manufactured by Iijima Electronics Corporation; Model: IS-300) was used to measure the oxygen absorption in the package 200 on each of the first, third and seventh days after the bottom material 300 and the cap material 400 were heat-sealed to each other, i.e. after storage of the package 200 in a hermetically sealed state was started. Specifically, with a needle 510 of the trace oxygen analyzer for food 500 stuck into the cap material 400 through an adhesive rubber 520, the oxygen absorption of the package 200 was measured under conditions of storage temperature: 5°C and sampling time: 7 seconds. The oxygen absorption on the third day is the total amount of oxygen absorbed by the package 200 during a time period between the first day and the third day, and the oxygen absorption on the seventh day is the total amount of oxygen absorbed by the package 200 during a time period between the first day and the seventh day.

As a result, the oxygen absorption on the first day was 0.018 cc/cm², the oxygen absorption on the third day was 0.040 cc/cm², and the oxygen absorption on the seventh day was 0.065 cc/cm² (see Table 1 below).

### (Example 2)

A package 200 was prepared in the same manner as in Example 1 except that a hindered phenol-based oxidation inhibitor (manufactured by BASF Ltd.; Product number: IRGANOX 1010) was added to a LDPE resin of a seal layer 160 such that the content of the hindered phenol-based oxidation inhibitor was 400 ppm in terms of the weight ratio with respect to two layers (the second adhesive layer 140 and the seal layer 160), and the oxygen absorption of the package 200 on each of the first, third and seventh days was measured in the same manner as in Example 1.

As a result, the oxygen absorption on the first day was 0.020 cc/cm², the oxygen absorption on the third day was 0.034 cc/cm², and the oxygen absorption on the seventh day was 0.071 cc/cm² (see Table 1 below).

### (Example 3)

A package 200 was prepared in the same manner as in Example 1 except that a hindered phenol-based oxidation inhibitor (manufactured by BASF Ltd.; Product number: IRGANOX 1010) was added to an adhesive polyolefin-based resin of a second adhesive layer 140 such that the content of the hindered phenol-based oxidation inhibitor was 400 ppm in terms of the weight ratio with respect to two layers (the second adhesive layer 140 and the seal layer 160), and the oxygen absorption of the package 200 on each of the first, third and seventh days was measured in the same manner as in Example 1.

As a result, the oxygen absorption on the first day was 0.019 cc/cm², the oxygen absorption on the third day was 0.036 cc/cm², and the oxygen absorption on the seventh day was 0.067 cc/cm² (see Table 1 below).

### (Example 4)

A package 200 was prepared in the same manner as in Example 1 except that a hindered phenol-based oxidation inhibitor was added to a LDPE resin of a seal layer 160 such that the content of the hindered phenol-based oxidation inhibitor was 800 ppm in terms of the weight ratio with respect to two layers (the second adhesive layer 140 and the seal layer 160), and the oxygen absorption of the package 200 on each of the first, third and seventh days was measured in the same manner as in Example 1.

As a result, the oxygen absorption on the first day was 0.007 cc/cm², the oxygen absorption on the third day was 0.029 cc/cm², and the oxygen absorption on the seventh day was 0.047 cc/cm² (see Table 1 below).

### (Example 5)

A package 200 was prepared in the same manner as in Example 1 except that a hindered phenol-based oxidation inhibitor was added to an adhesive polyolefin-based resin of a second adhesive layer 140 such that the content of the hindered phenol-based oxidation inhibitor was 800 ppm in terms of the weight ratio with respect to two layers (the second adhesive layer 140 and the seal layer 160), and the oxygen absorption of the package 200 on each of the first, third and seventh days was measured in the same manner as in Example 1.

As a result, the oxygen absorption on the first day was 0.008 cc/cm², the oxygen absorption on the third day was 0.033 cc/cm², and the oxygen absorption on the seventh day was 0.050 cc/cm² (see Table 1 below).

### (Example 6)

A package 200 was prepared in the same manner as in Example 1 except that a hindered phenol-based oxidation inhibitor was added to an adhesive polyolefin-based resin of a second adhesive layer 140 such that the content of the hindered phenol-based oxidation inhibitor was 400 ppm in terms of the weight ratio with respect to two layers (the second adhesive layer 140 and the seal layer 160), and further a hindered phenol-based oxidation inhibitor was added to a LDPE resin of the seal layer 160 such that the content of the hindered phenol-based oxidation inhibitor was 400 ppm in terms of the weight ratio with respect to two layers (the second adhesive layer 140 and the seal layer 160), and the oxygen absorption of the package 200 on each of the first, third and seventh days was measured in the same manner as in Example 1.

As a result, the oxygen absorption on the first day was 0.005 cc/cm², the oxygen absorption on the third day was 0.027 cc/cm², and the oxygen absorption on the seventh day was 0.043 cc/cm² (see Table 1 below).

### (Example 7)

A package 200 was prepared in the same manner as in Example 6 except that no hindered phenol-based oxidation inhibitor was added to a mixture of a base resin and an unsaturated polyolefin-based oxygen-absorbing resin of an oxygen-absorbing layer 150, and the oxygen absorption of the package 200 on each of the first, third and seventh days was measured in the same manner as in Example 1.

As a result, the oxygen absorption on the first day was 0.004 cc/cm², the oxygen absorption on the third day was 0.020 cc/cm², and the oxygen absorption on the seventh day was 0.027 cc/cm² (see Table 1 below).

### (Example 8)

A package 200 was prepared in the same manner as in Example 6 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 170 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.002 cc/cm², the oxygen absorption on the third day was 0.012 cc/cm², and the oxygen absorption on the seventh day was 0.018 cc/cm² (see Table 1 below).

### (Example 9)

A package 200 was prepared in the same manner as in Example 1 except that no hindered phenol-based oxidation inhibitor was added to a mixture of a base resin and an unsaturated polyolefin-based oxygen-absorbing resin of an oxygen-absorbing layer 150, and the oxygen absorption of the package 200 on each of the first, third and seventh days was measured in the same manner as in Example 1.

As a result, the oxygen absorption on the first day was 0.018 cc/cm², the oxygen absorption on the third day was 0.028 cc/cm², and the oxygen absorption on the seventh day was 0.040 cc/cm² (see Table 1 below).

### (Example 10)

A package 200 was prepared in the same manner as in Example 1 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 5 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.020 cc/cm², the oxygen absorption on the third day was 0.047 cc/cm², and the oxygen absorption on the seventh day was 0.076 cc/cm² (see Table 1 below).

### (Example 11)

A package 200 was prepared in the same manner as in Example 1 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 35 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.030 cc/cm², the oxygen absorption on the third day was 0.053 cc/cm², and the oxygen absorption on the seventh day was 0.078 cc/cm² (see Table 1 below).

### (Example 12)

A package 200 was prepared in the same manner as in Example 11, and the oxygen absorption of the package 200 on each of the first, third and seventh days was measured in the same manner as in Example 1 except that the storage temperature was 23°C.

As a result, the oxygen absorption on the first day was 0.051 cc/cm², the oxygen absorption on the third day was 0.113 cc/cm², and the oxygen absorption on the seventh day was 0.133 cc/cm² (see Table 1 below).

### (Example 13)

A package 200 was prepared in the same manner as in Example 11, and the oxygen absorption of the package 200 on each of the first, third and seventh days was measured in the same manner as in Example 1 except that the storage temperature was 50°C.

As a result, the oxygen absorption on the first day was 0.165 cc/cm², the oxygen absorption on the third day was 0.215 cc/cm², and the oxygen absorption on the seventh day was 0.215 cc/cm² (see Table 1 below).

### (Example 14)

A package 200 was prepared in the same manner as in Example 1 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 60 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.032 cc/cm², the oxygen absorption on the third day was 0.046 cc/cm², and the oxygen absorption on the seventh day was 0.073 cc/cm² (see Table 1 below).

### (Example 15)

A package 200 was prepared in the same manner as in Example 1 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 170 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.005 cc/cm², the oxygen absorption on the third day was 0.018 cc/cm², and the oxygen absorption on the seventh day was 0.043 cc/cm² (see Table 1 below).

### (Example 16)

A package 200 was prepared in the same manner as in Example 9 except that cobalt stearate was added to a mixture of a base resin and an unsaturated polyolefin-based oxygen-absorbing resin of an oxygen-absorbing layer 150 such that the content of cobalt stearate was 100 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.008 cc/cm², the oxygen absorption on the third day was 0.016 cc/cm², and the oxygen absorption on the seventh day was 0.029 cc/cm² (see Table 1 below).

### (Example 17)

A package 200 was prepared in the same manner as in Example 9 except that cobalt stearate was added to a mixture of a base resin and an unsaturated polyolefin-based oxygen-absorbing resin of an oxygen-absorbing layer 150 such that the content of cobalt stearate was 500 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.018 cc/cm², the oxygen absorption on the third day was 0.025 cc/cm², and the oxygen absorption on the seventh day was 0.039 cc/cm² (see Table 1 below).

### (Example 18)

A package 200 was prepared in the same manner as in Example 9 except that cobalt stearate was added to a mixture of a base resin and an unsaturated polyolefin-based oxygen-absorbing resin of an oxygen-absorbing layer 150 such that the content of cobalt stearate was 2000 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.019 cc/cm², the oxygen absorption on the third day was 0.035 cc/cm², and the oxygen absorption on the seventh day was 0.043 cc/cm² (see Table 1 below).

### (Example 19)

A package 200 was prepared in the same manner as in Example 9 except that cobalt stearate was added to a mixture of a base resin and an unsaturated polyolefin-based oxygen-absorbing resin of an oxygen-absorbing layer 150 such that the content of cobalt stearate was 3000 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.023 cc/cm², the oxygen absorption on the third day was 0.037 cc/cm², and the oxygen absorption on the seventh day was 0.047 cc/cm² (see Table 1 below).

### (Example 20)

A package 200 was prepared in the same manner as in Example 9 except that cobalt stearate was added to a mixture of a base resin and an unsaturated polyolefin-based oxygen-absorbing resin of an oxygen-absorbing layer 150 such that the content of cobalt stearate was 3500 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.022 cc/cm², the oxygen absorption on the third day was 0.038 cc/cm², and the oxygen absorption on the seventh day was 0.049 cc/cm² (see Table 1 below).

### (Example 21)

A package 200 was prepared in the same manner as in Example 11 except that cobalt stearate was added to a mixture of a base resin and an unsaturated polyolefin-based oxygen-absorbing resin of an oxygen-absorbing layer 150 such that the content of cobalt stearate was 100 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.004 cc/cm², the oxygen absorption on the third day was 0.023 cc/cm², and the oxygen absorption on the seventh day was 0.042 cc/cm² (see Table 1 below).

### (Example 22)

A package 200 was prepared in the same manner as in Example 11 except that cobalt stearate was added to a mixture of a base resin and an unsaturated polyolefin-based oxygen-absorbing resin of an oxygen-absorbing layer 150 such that the content of cobalt stearate was 500 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.020 cc/cm², the oxygen absorption on the third day was 0.054 cc/cm², and the oxygen absorption on the seventh day was 0.071 cc/cm² (see Table 1 below).

### (Example 23)

A package 200 was prepared in the same manner as in Example 11 except that cobalt stearate was added to a mixture of a base resin and an unsaturated polyolefin-based oxygen-absorbing resin of an oxygen-absorbing layer 150 such that the content of cobalt stearate was 2000 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.019 cc/cm², the oxygen absorption on the third day was 0.054 cc/cm², and the oxygen absorption on the seventh day was 0.070 cc/cm² (see Table 1 below).

### (Example 24)

A package 200 was prepared in the same manner as in Example 11 except that cobalt stearate was added to a mixture of a base resin and an unsaturated polyolefin-based oxygen-absorbing resin of an oxygen-absorbing layer 150 such that the content of cobalt stearate was 3000 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.025 cc/cm², the oxygen absorption on the third day was 0.076 cc/cm², and the oxygen absorption on the seventh day was 0.095 cc/cm² (see Table 1 below).

### (Example 25)

A package 200 was prepared in the same manner as in Example 11 except that cobalt stearate was added to a mixture of a base resin and an unsaturated polyolefin-based oxygen-absorbing resin of an oxygen-absorbing layer 150 such that the content of cobalt stearate was 3500 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.027 cc/cm², the oxygen absorption on the third day was 0.080 cc/cm², and the oxygen absorption on the seventh day was 0.099 cc/cm² (see Table 1 below).

### (Example 26)

A package 200 was prepared in the same manner as in Example 15 except that cobalt stearate was added to a mixture of a base resin and an unsaturated polyolefin-based oxygen-absorbing resin of an oxygen-absorbing layer 150 such that the content of cobalt stearate was 100 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.003 cc/cm², the oxygen absorption on the third day was 0.015 cc/cm², and the oxygen absorption on the seventh day was 0.032 cc/cm² (see Table 1 below).

### (Example 27)

A package 200 was prepared in the same manner as in Example 15 except that cobalt stearate was added to a mixture of a base resin and an unsaturated polyolefin-based oxygen-absorbing resin of an oxygen-absorbing layer 150 such that the content of cobalt stearate was 500 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.003 cc/cm², the oxygen absorption on the third day was 0.019 cc/cm², and the oxygen absorption on the seventh day was 0.035 cc/cm² (see Table 1 below).

### (Example 28)

A package 200 was prepared in the same manner as in Example 15 except that cobalt stearate was added to a mixture of a base resin and an unsaturated polyolefin-based oxygen-absorbing resin of an oxygen-absorbing layer 150 such that the content of cobalt stearate was 2000 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.007 cc/cm², the oxygen absorption on the third day was 0.023 cc/cm², and the oxygen absorption on the seventh day was 0.048 cc/cm² (see Table 1 below).

### (Example 29)

A package 200 was prepared in the same manner as in Example 15 except that cobalt stearate was added to a mixture of a base resin and an unsaturated polyolefin-based oxygen-absorbing resin of an oxygen-absorbing layer 150 such that the content of cobalt stearate was 3000 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.008 cc/cm², the oxygen absorption on the third day was 0.025 cc/cm², and the oxygen absorption on the seventh day was 0.050 cc/cm² (see Table 1 below).

### (Example 30)

A package 200 was prepared in the same manner as in Example 15 except that cobalt stearate was added to a mixture of a base resin and an unsaturated polyolefin-based oxygen-absorbing resin of an oxygen-absorbing layer 150 such that the content of cobalt stearate was 3500 ppm in terms of the weight ratio with respect to the oxygen-absorbing layer 150, and the oxygen absorption of the package 200 on each of the first, third and seventh days was measured in the same manner as in Example 1.

As a result, the oxygen absorption on the first day was 0.009 cc/cm², the oxygen absorption on the third day was 0.027 cc/cm², and the oxygen absorption on the seventh day was 0.049 cc/cm² (see Table 1 below).

### (Comparative Example 1)

A package was prepared in the same manner as in Example 9 except that no cobalt stearate was added to a mixture of a base resin and an unsaturated polyolefin-based oxygen-absorbing resin of an oxygen-absorbing layer 150, and the oxygen absorption of the package on each of the first, third and seventh days was measured in the same manner as in Example 1.

As a result, the oxygen absorption on the first day was 0.000 cc/cm², the oxygen absorption on the third day was 0.000 cc/cm², and the oxygen absorption on the seventh day was 0.003 cc/cm² (see Table 1 below).

### (Comparative Example 2)

A package was prepared in the same manner as in Example 11 except that no cobalt stearate was added to a mixture of a base resin and an unsaturated polyolefin-based oxygen-absorbing resin of an oxygen-absorbing layer 150, and the oxygen absorption of the package on each of the first, third and seventh days was measured in the same manner as in Example 1.

As a result, the oxygen absorption on the first day was 0.000 cc/cm², the oxygen absorption on the third day was 0.000 cc/cm², and the oxygen absorption on the seventh day was 0.004 cc/cm² (see Table 1 below).

### (Comparative Example 3)

A package was prepared in the same manner as in Example 15 except that no cobalt stearate was added to a mixture of a base resin and an unsaturated polyolefin-based oxygen-absorbing resin of an oxygen-absorbing layer 150, and the oxygen absorption of the package on each of the first, third and seventh days was measured in the same manner as in Example 1.

As a result, the oxygen absorption on the first day was 0.000 cc/cm², the oxygen absorption on the third day was 0.000 cc/cm², and the oxygen absorption on the seventh day was 0.001 cc/cm² (see Table 1 below).

**[Table 1]**

| | Oxygen absorption reaction catalyst (ppm) | Oxidation inhibitor of oxygen-absorbing layer (ppm) | Oxidation inhibitor of second adhesive layer (ppm) | Oxidation inhibitor of seal layer (ppm) | Oxidation inhibitor of two layers (second adhesive layer and seal layer) (ppm) | Storage temperature (°C) | Oxygen absorption (cc/cm²) | | |
|---|---|---|---|---|---|---|---|---|---|
| | | | | | | | First day | Third day | Seventh day |
| Example 1 | 1000 | 120 | 0 | 0 | 0 | 5 | 0.018 | 0.040 | 0.065 |
| Example 2 | 1000 | 120 | 0 | 400 | 400 | 5 | 0.020 | 0.034 | 0.071 |
| Example 3 | 1000 | 120 | 400 | 0 | 400 | 5 | 0.019 | 0.036 | 0.067 |
| Example 4 | 1000 | 120 | 0 | 800 | 800 | 5 | 0.007 | 0.029 | 0.047 |
| Example 5 | 1000 | 120 | 800 | 0 | 800 | 5 | 0.008 | 0.033 | 0.050 |
| Example 6 | 1000 | 120 | 400 | 400 | 800 | 5 | 0.005 | 0.027 | 0.043 |
| Example 7 | 1000 | 0 | 400 | 400 | 800 | 5 | 0.004 | 0.020 | 0.027 |
| Example 8 | 1000 | 170 | 400 | 400 | 800 | 5 | 0.002 | 0.012 | 0.018 |
| Example 9 | 1000 | 0 | 0 | 0 | 0 | 5 | 0.018 | 0.028 | 0.040 |
| Example 10 | 1000 | 5 | 0 | 0 | 0 | 5 | 0.020 | 0.047 | 0.076 |
| Example 11 | 1000 | 35 | 0 | 0 | 0 | 5 | 0.030 | 0.053 | 0.078 |
| Example 12 | 1000 | 35 | 0 | 0 | 0 | 23 | 0.051 | 0.113 | 0.133 |
| Example 13 | 1000 | 35 | 0 | 0 | 0 | 50 | 0.165 | 0.215 | 0.215 |
| Example 14 | 1000 | 60 | 0 | 0 | 0 | 5 | 0.032 | 0.046 | 0.073 |
| Example 15 | 1000 | 170 | 0 | 0 | 0 | 5 | 0.005 | 0.018 | 0.043 |
| Example 16 | 100 | 0 | 0 | 0 | 0 | 5 | 0.008 | 0.016 | 0.029 |
| Example 17 | 500 | 0 | 0 | 0 | 0 | 5 | 0.018 | 0.025 | 0.039 |
| Example 18 | 2000 | 0 | 0 | 0 | 0 | 5 | 0.019 | 0.035 | 0.043 |
| Example 19 | 3000 | 0 | 0 | 0 | 0 | 5 | 0.023 | 0.037 | 0.047 |
| Example 20 | 3500 | 0 | 0 | 0 | 0 | 5 | 0.022 | 0.038 | 0.049 |
| Example 21 | 100 | 35 | 0 | 0 | 0 | 5 | 0.004 | 0.023 | 0.042 |
| Example 22 | 500 | 35 | 0 | 0 | 0 | 5 | 0.020 | 0.054 | o.o71 |
| Example 23 | 2000 | 35 | 0 | 0 | 0 | 5 | 0.019 | 0.054 | 0.070 |
| Example 24 | 3000 | 35 | 0 | 0 | 0 | 5 | 0.025 | 0.076 | 0.095 |
| Example 25 | 3500 | 35 | 0 | 0 | 0 | 5 | 0.027 | 0.080 | 0.099 |
| Example 26 | 100 | 170 | 0 | 0 | 0 | 5 | 0.003 | 0.015 | 0.032 |
| Example 27 | 500 | 170 | 0 | 0 | 0 | 5 | 0.003 | 0.019 | 0.035 |
| Example 28 | 2000 | 170 | 0 | 0 | 0 | 5 | 0.007 | 0.023 | 0.048 |
| Example 29 | 3000 | 170 | 0 | 0 | 0 | 5 | 0.008 | 0.025 | 0.050 |
| Example 30 | 3500 | 170 | 0 | 0 | 0 | 5 | 0.009 | 0.027 | 0.049 |
| Comparative Example 1 | 0 | 0 | 0 | 0 | 0 | 5 | 0.000 | 0.000 | 0.003 |
| Comparative Example 2 | 0 | 35 | 0 | 0 | 0 | 5 | 0.000 | 0.000 | 0.004 |
| Comparative Example 3 | 0 | 170 | 0 | 0 | 0 | 5 | 0.000 | 0.000 | 0.001 |

The package 200 according to Examples 1 to 30 absorbed a larger amount of oxygen and had a higher oxygen absorbing ability as compared to the package according to Comparative Examples 1 to 3. Examples 1 to 3, 10 to 14 and 22 to 25, where the content of the oxygen absorption reaction catalyst in the oxygen-absorbing layer 150 was 500 ppm or more and less than 4000 ppm, the content of the oxidation inhibitor in the oxygen-absorbing layer 150 was 5 ppm to 120 ppm inclusive, and the content of the oxidation inhibitor in two layers (the second adhesive layer 140 and the seal layer 160) was 0 ppm to 400 ppm inclusive, absorbed a larger amount of oxygen and had a higher oxygen absorbing ability as compared to other examples and comparative examples. As is apparent from each oxygen absorption of the package 200 according to Examples 11 to 13, the package 200 retained an excellent oxygen absorbing ability at any of storage temperatures of 5 to 50°C.

### (Example 31)

A laminated film 100 and a package 200 were obtained in the same manner as in Example 1 except for the following. Cobalt stearate as an oxygen absorption reaction catalyst was added to a mixture of a base resin and an unsaturated polyolefin-based oxygen-absorbing resin of an oxygen-absorbing layer 150 such that the content of cobalt stearate was 100 ppm in terms of the weight ratio with respect to the oxygen-absorbing layer 150. No oxidation inhibitor was added to the oxygen-absorbing layer 150.

For the package 200, the oxygen absorption was measured in the same manner as in Example 1. As a result, the oxygen absorption on the first day was 0.008 cc/cm², the oxygen absorption on the third day was 0.016 cc/cm², and the oxygen absorption on the seventh day was 0.029 cc/cm² (see Table 2 below).

### <Evaluation of appearance>

Further, the appearance of the laminated film 100 was visually observed, and an evaluation was made for presence/absence of a tinge. A film that was not tinged was rated as o, and a film that was tinged was rated as ×. The laminated film 100 was not tinged, and was therefore rated as o for appearance (see Table 2 below).

### (Example 32)

A package 200 was prepared in the same manner as in Example 31 except that a hindered phenol-based oxidation inhibitor (manufactured by BASF Ltd.; Product number: IRGANOX 1010) was added to a mixture of a base resin and an unsaturated polyolefin-based oxygen-absorbing resin of an oxygen-absorbing layer 150 such that the content of the hindered phenol-based oxidation inhibitor was 35 ppm in terms of the weight ratio with respect to the oxygen-absorbing layer 150, and the oxygen absorption of the package 200 on each of the first, third and seventh days was measured in the same manner as in Example 31.

As a result, the oxygen absorption on the first day was 0.004 cc/cm², the oxygen absorption on the third day was 0.023 cc/cm², and the oxygen absorption on the seventh day was 0.042 cc/cm². The laminated film 100 was not tinged, and was therefore rated as o for appearance (see Table 2 below).

### (Example 33)

A package 200 was prepared in the same manner as in Example 31 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 170 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.003 cc/cm², the oxygen absorption on the third day was 0.015 cc/cm², and the oxygen absorption on the seventh day was 0.032 cc/cm². The laminated film 100 was not tinged, and was therefore rated as o for appearance (see Table 2 below).

### (Example 34)

A package 200 was prepared in the same manner as in Example 31 except that cobalt stearate was added to a mixture of a base resin and an unsaturated polyolefin-based oxygen-absorbing resin of an oxygen-absorbing layer 150 such that the content of cobalt stearate was 500 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.018 cc/cm², the oxygen absorption on the third day was 0.025 cc/cm², and the oxygen absorption on the seventh day was 0.039 cc/cm². The laminated film 100 was not tinged, and was therefore rated as o for appearance (see Table 2 below).

### (Example 35)

A package 200 was prepared in the same manner as in Example 34 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 35 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.020 cc/cm², the oxygen absorption on the third day was 0.054 cc/cm², and the oxygen absorption on the seventh day was 0.071 cc/cm². The laminated film 100 was not tinged, and was therefore rated as o for appearance (see Table 2 below).

### (Example 36)

A package 200 was prepared in the same manner as in Example 34 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 170 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.003 cc/cm², the oxygen absorption on the third day was 0.019 cc/cm², and the oxygen absorption on the seventh day was 0.035 cc/cm². The laminated film 100 was not tinged, and was therefore rated as o for appearance (see Table 2 below).

### (Example 37)

A package 200 was prepared in the same manner as in Example 31 except that cobalt stearate was added to a mixture of a base resin and an unsaturated polyolefin-based oxygen-absorbing resin of an oxygen-absorbing layer 150 such that the content of cobalt stearate was 1000 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.018 cc/cm², the oxygen absorption on the third day was 0.028 cc/cm², and the oxygen absorption on the seventh day was 0.040 cc/cm². The laminated film 100 was not tinged, and was therefore rated as o for appearance (see Table 2 below).

### (Example 38)

A package 200 was prepared in the same manner as in Example 37 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 5 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.020 cc/cm², the oxygen absorption on the third day was 0.047 cc/cm², and the oxygen absorption on the seventh day was 0.076 cc/cm². The laminated film 100 was not tinged, and was therefore rated as o for appearance (see Table 2 below).

### (Example 39)

A package 200 was prepared in the same manner as in Example 37 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 35 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.030 cc/cm², the oxygen absorption on the third day was 0.053 cc/cm², and the oxygen absorption on the seventh day was 0.078 cc/cm². The laminated film 100 was not tinged, and was therefore rated as o for appearance (see Table 2 below).

### (Example 40)

A package 200 was prepared in the same manner as in Example 39, the oxygen absorption of the package 200 on each of the first, third and seventh days was measured in the same manner as in Example 31 except that the storage temperature was 23°C, and further the appearance was evaluated.

As a result, the oxygen absorption on the first day was 0.051 cc/cm², the oxygen absorption on the third day was 0.113 cc/cm², and the oxygen absorption on the seventh day was 0.133 cc/cm². The laminated film 100 was not tinged, and was therefore rated as o for appearance (see Table 2 below).

### (Example 41)

A package 200 was prepared in the same manner as in Example 39, the oxygen absorption of the package 200 on each of the first, third and seventh days was measured in the same manner as in Example 31 except that the storage temperature was 50°C, and further the appearance was evaluated.

As a result, the oxygen absorption on the first day was 0.165 cc/cm², the oxygen absorption on the third day was 0.215 cc/cm², and the oxygen absorption on the seventh day was 0.215 cc/cm², The laminated film 100 was not tinged, and was therefore rated as o for appearance (see Table 2 below).

### (Example 42)

A package 200 was prepared in the same manner as in Example 37 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 60 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.032 cc/cm², the oxygen absorption on the third day was 0.046 cc/cm², and the oxygen absorption on the seventh day was 0.073 cc/cm². The laminated film 100 was not tinged, and was therefore rated as o for appearance (see Table 2 below).

### (Example 43)

A package 200 was prepared in the same manner as in Example 37 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 120 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.018 cc/cm², the oxygen absorption on the third day was 0.040 cc/cm², and the oxygen absorption on the seventh day was 0.065 cc/cm². The laminated film 100 was not tinged, and was therefore rated as o for appearance (see Table 2 below).

### (Example 44)

A package 200 was prepared in the same manner as in Example 37 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 170 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.005 cc/cm², the oxygen absorption on the third day was 0.018 cc/cm², and the oxygen absorption on the seventh day was 0.043 cc/cm². The laminated film 100 was not tinged, and was therefore rated as o for appearance (see Table 2 below).

### (Example 45)

A package 200 was prepared in the same manner as in Example 31 except that cobalt stearate was added to a mixture of a base resin and an unsaturated polyolefin-based oxygen-absorbing resin of an oxygen-absorbing layer 150 such that the content of cobalt stearate was 2000 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.019 cc/cm², the oxygen absorption on the third day was 0.035 cc/cm², and the oxygen absorption on the seventh day was 0.043 cc/cm². The laminated film 100 was not tinged, and was therefore rated as o for appearance (see Table 2 below).

### (Example 46)

A package 200 was prepared in the same manner as in Example 45 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 35 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.019 cc/cm², the oxygen absorption on the third day was 0.054 cc/cm², and the oxygen absorption on the seventh day was 0.070 cc/cm², The laminated film 100 was not tinged, and was therefore rated as o for appearance (see Table 2 below).

### (Example 47)

A package 200 was prepared in the same manner as in Example 45 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 170 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.007 cc/cm², the oxygen absorption on the third day was 0.023 cc/cm², and the oxygen absorption on the seventh day was 0.048 cc/cm². The laminated film 100 was not tinged, and was therefore rated as o for appearance (see Table 2 below).

### (Example 48)

A package 200 was prepared in the same manner as in Example 31 except that cobalt stearate was added to a mixture of a base resin and an unsaturated polyolefin-based oxygen-absorbing resin of an oxygen-absorbing layer 150 such that the content of cobalt stearate was 3000 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.023 cc/cm², the oxygen absorption on the third day was 0.037 cc/cm², and the oxygen absorption on the seventh day was 0.047 cc/cm². The laminated film 100 was not tinged, and was therefore rated as o for appearance (see Table 2 below).

### (Example 49)

A package 200 was prepared in the same manner as in Example 48 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 35 ppm in terms of the weight ratio with respect to the oxygen-absorbing layer 150, the oxygen absorption of the package 200 on each of the first, third and seventh days was measured in the same manner as in Example 48, and further the appearance was evaluated.

As a result, the oxygen absorption on the first day was 0.025 cc/cm², the oxygen absorption on the third day was 0.076 cc/cm², and the oxygen absorption on the seventh day was 0.095 cc/cm². The laminated film 100 was not tinged, and was therefore rated as o for appearance (see Table 2 below).

### (Example 50)

A package 200 was prepared in the same manner as in Example 48 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 170 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.008 cc/cm², the oxygen absorption on the third day was 0.025 cc/cm², and the oxygen absorption on the seventh day was 0.050 cc/cm². The laminated film 100 was not tinged, and was therefore rated as o for appearance (see Table 2 below).

### (Example 51)

A package 200 was prepared in the same manner as in Example 31 except that cobalt stearate was added to a mixture of a base resin and an unsaturated polyolefin-based oxygen-absorbing resin of an oxygen-absorbing layer 150 such that the content of cobalt stearate was 3500 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.022 cc/cm², the oxygen absorption on the third day was 0.038 cc/cm², and the oxygen absorption on the seventh day was 0.049 cc/cm². The laminated film 100 was not tinged, and was therefore rated as o for appearance (see Table 2 below).

### (Example 52)

A package 200 was prepared in the same manner as in Example 51 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 35 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.027 cc/cm², the oxygen absorption on the third day was 0.080 cc/cm², and the oxygen absorption on the seventh day was 0.099 cc/cm², The laminated film 100 was not tinged, and was therefore rated as o for appearance (see Table 2 below).

### (Example 53)

A package 200 was prepared in the same manner as in Example 51 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 170 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.009 cc/cm², the oxygen absorption on the third day was 0.027 cc/cm², and the oxygen absorption on the seventh day was 0.049 cc/cm². The laminated film 100 was not tinged, and was therefore rated as o for appearance (see Table 2 below).

### (Example 54)

A package 200 was prepared in the same manner as in Example 31 except that cobalt stearate was added to a mixture of a base resin and an unsaturated polyolefin-based oxygen-absorbing resin of an oxygen-absorbing layer 150 such that the content of cobalt stearate was 5000 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.025 cc/cm², the oxygen absorption on the third day was 0.040 cc/cm², and the oxygen absorption on the seventh day was 0.055 cc/cm². The laminated film 100 was not tinged, and was therefore rated as o for appearance (see Table 2 below).

### (Example 55)

A package 200 was prepared in the same manner as in Example 54 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 35 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.030 cc/cm², the oxygen absorption on the third day was 0.085 cc/cm², and the oxygen absorption on the seventh day was 0.105 cc/cm², The laminated film 100 was not tinged, and was therefore rated as o for appearance (see Table 2 below).

### (Example 56)

A package 200 was prepared in the same manner as in Example 54 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 170 ppm in terms of the weight ratio with respect to the oxygen-absorbing layer 150, the oxygen absorption of the package 200 on each of the first, third and seventh days was measured in the same manner as in Example 31, and further the appearance was evaluated.

As a result, the oxygen absorption on the first day was 0.012 cc/cm², the oxygen absorption on the third day was 0.035 cc/cm², and the oxygen absorption on the seventh day was 0.055 cc/cm². The laminated film 100 was not tinged, and was therefore rated as o for appearance (see Table 2 below).

### (Comparative Example 4)

A package was prepared in the same manner as in Example 31 except that no cobalt stearate was added to a mixture of a base resin and an unsaturated polyolefin-based oxygen-absorbing resin of an oxygen-absorbing layer 150, the oxygen absorption of the package on each of the first, third and seventh days was measured in the same manner as in Example 31, and further the appearance was evaluated.

As a result, the oxygen absorption on the first day was 0.000 cc/cm², the oxygen absorption on the third day was 0.000 cc/cm², and the oxygen absorption on the seventh day was 0.003 cc/cm². The laminated film was not tinged, and was therefore rated as o for appearance (see Table 2 below).

### (Comparative Example 5)

A package was prepared in the same manner as in Comparative Example 4 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 35 ppm in terms of the weight ratio with respect to the oxygen-absorbing layer 150, the oxygen absorption of the package on each of the first, third and seventh days was measured in the same manner as in Example 31, and further the appearance was evaluated.

As a result, the oxygen absorption on the first day was 0.000 cc/cm², the oxygen absorption on the third day was 0.000 cc/cm², and the oxygen absorption on the seventh day was 0.004 cc/cm². The laminated film was not tinged, and was therefore rated as o for appearance (see Table 2 below).

### (Comparative Example 6)

A package was prepared in the same manner as in Comparative Example 4 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 170 ppm in terms of the weight ratio with respect to the oxygen-absorbing layer 150, the oxygen absorption of the package on each of the first, third and seventh days was measured in the same manner as in Example 31, and further the appearance was evaluated.

As a result, the oxygen absorption on the first day was 0.000 cc/cm², the oxygen absorption on the third day was 0.000 cc/cm², and the oxygen absorption on the seventh day was 0.001 cc/cm². The laminated film was not tinged, and was therefore rated as o for appearance (see Table 2 below).

### (Comparative Example 7)

A package was prepared in the same manner as in Example 31 except that cobalt stearate was added to a mixture of a base resin and an unsaturated polyolefin-based oxygen-absorbing resin of an oxygen-absorbing layer 150 such that the content of cobalt stearate was 10 ppm in terms of the weight ratio with respect to the oxygen-absorbing layer 150, the oxygen absorption of the package on each of the first, third and seventh days was measured in the same manner as in Example 31, and further the appearance was evaluated.

As a result, the oxygen absorption on the first day was 0.000 cc/cm², the oxygen absorption on the third day was 0.000 cc/cm², and the oxygen absorption on the seventh day was 0.002 cc/cm². The laminated film was not tinged, and was therefore rated as o for appearance (see Table 2 below).

### (Comparative Example 8)

A package was prepared in the same manner as in Comparative Example 7 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 35 ppm in terms of the weight ratio with respect to the oxygen-absorbing layer 150, the oxygen absorption of the package on each of the first, third and seventh days was measured in the same manner as in Example 31, and further the appearance was evaluated.

As a result, the oxygen absorption on the first day was 0.000 cc/cm², the oxygen absorption on the third day was 0.000 cc/cm², and the oxygen absorption on the seventh day was 0.002 cc/cm². The laminated film was not tinged, and was therefore rated as o for appearance (see Table 2 below).

### (Comparative Example 9)

A package was prepared in the same manner as in Comparative Example 7 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 170 ppm in terms of the weight ratio with respect to the oxygen-absorbing layer 150, the oxygen absorption of the package on each of the first, third and seventh days was measured in the same manner as in Example 31, and further the appearance was evaluated.

As a result, the oxygen absorption on the first day was 0.000 cc/cm², the oxygen absorption on the third day was 0.000 cc/cm², and the oxygen absorption on the seventh day was 0.002 cc/cm². The laminated film was not tinged, and was therefore rated as o for appearance (see Table 2 below).

### (Comparative Example 10)

A package was prepared in the same manner as in Example 31 except that cobalt stearate was added to a mixture of a base resin and an unsaturated polyolefin-based oxygen-absorbing resin of an oxygen-absorbing layer 150 such that the content of cobalt stearate was 5500 ppm in terms of the weight ratio with respect to the oxygen-absorbing layer 150, the oxygen absorption of the package on each of the first, third and seventh days was measured in the same manner as in Example 31, and further the appearance was evaluated.

As a result, the oxygen absorption on the first day was 0.024 cc/cm², the oxygen absorption on the third day was 0.040 cc/cm², and the oxygen absorption on the seventh day was 0.053 cc/cm². The laminated film was tinged, and was therefore rated as × for appearance (see Table 2 below).

### (Comparative Example 11)

A package was prepared in the same manner as in Comparative Example 10 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 35 ppm in terms of the weight ratio with respect to the oxygen-absorbing layer 150, the oxygen absorption of the package on each of the first, third and seventh days was measured in the same manner as in Example 31, and further the appearance was evaluated.

As a result, the oxygen absorption on the first day was 0.028 cc/cm², the oxygen absorption on the third day was 0.087 cc/cm², and the oxygen absorption on the seventh day was 0.103 cc/cm². The laminated film was tinged, and was therefore rated as × for appearance (see Table 2 below).

### (Comparative Example 12)

A package was prepared in the same manner as in Comparative Example 10 except that a hindered phenol-based oxidation inhibitor was added to a mixture of a base resin and an unsaturated polyolefin-based oxygen-absorbing resin of an oxygen-absorbing layer 150 such that the content of the hindered phenol-based oxidation inhibitor was 170 ppm in terms of the weight ratio with respect to the oxygen-absorbing layer 150, the oxygen absorption of the package on each of the first, third and seventh days was measured in the same manner as in Example 31, and further the appearance was evaluated.

As a result, the oxygen absorption on the first day was 0.013 cc/cm², the oxygen absorption on the third day was 0.034 cc/cm², and the oxygen absorption on the seventh day was 0.057 cc/cm². The laminated film was tinged, and was therefore rated as × for appearance (see Table 2 below).

**[Table 2]**

| | Oxygen absorption reaction catalyst (ppm) | Oxidation inhibitor of oxygen-absorbing layer (ppm) | Storage temperature (°C) | Oxygen absorption (cc/cm²) | | | Appearance |
|---|---|---|---|---|---|---|---|
| | | | | First day | Third day | Seventh day | |
| Example 31 | 100 | 0 | 5 | 0.008 | 0.016 | 0.029 | o |
| Example 32 | 100 | 35 | 5 | 0.004 | 0.023 | 0.042 | o |
| Example 33 | 100 | 170 | 5 | 0.003 | 0.015 | 0.032 | o |
| Example 34 | 500 | 0 | 5 | 0.018 | 0.025 | 0.039 | o |
| Example 35 | 500 | 35 | 5 | 0.020 | 0.054 | 0.071 | o |
| Example 36 | 500 | 170 | 5 | 0.003 | 0.019 | 0.035 | o |
| Example 37 | 1000 | 0 | 5 | 0.018 | 0.028 | 0.040 | o |
| Example 38 | 1000 | 5 | 5 | 0.020 | 0.047 | 0.076 | o |
| Example 39 | 1000 | 35 | 5 | 0.030 | 0.053 | 0.078 | o |
| Example 40 | 1000 | 35 | 23 | 0.051 | 0.113 | 0.133 | o |
| Example 41 | 1000 | 35 | 50 | 0.165 | 0.215 | 0.215 | o |
| Example 42 | 1000 | 60 | 5 | 0.032 | 0.046 | 0.073 | o |
| Example 43 | 1000 | 120 | 5 | 0.018 | 0.040 | 0.065 | o |
| Example 44 | 1000 | 170 | 5 | 0.005 | 0.018 | 0.043 | o |
| Example 45 | 2000 | 0 | 5 | 0.019 | 0.035 | 0.043 | o |
| Example 46 | 2000 | 35 | 5 | 0.019 | 0.054 | 0.070 | o |
| Example 47 | 2000 | 170 | 5 | 0.007 | 0.023 | 0.048 | o |
| Example 48 | 3000 | 0 | 5 | 0.023 | 0.037 | 0.047 | o |
| Example 49 | 3000 | 35 | 5 | 0.025 | 0.076 | 0.095 | o |
| Example 50 | 3000 | 170 | 5 | 0.008 | 0.025 | 0.050 | o |
| Example 51 | 3500 | 0 | 5 | 0.022 | 0.038 | 0.049 | o |
| Example 52 | 3500 | 35 | 5 | 0.027 | 0.080 | 0.099 | o |
| Example 53 | 3500 | 170 | 5 | 0.009 | 0.027 | 0.049 | o |
| Example 54 | 5000 | 0 | 5 | 0.025 | 0.040 | 0.055 | o |
| Example 55 | 5000 | 35 | 5 | 0.030 | 0.085 | 0.105 | o |
| Example 56 | 5000 | 170 | 5 | 0.012 | 0.035 | 0.055 | o |
| Comparative Example 4 | 0 | 0 | 5 | 0.000 | 0.000 | 0.003 | o |
| Comparative Example 5 | 0 | 35 | 5 | 0.000 | 0.000 | 0.004 | o |
| Comparative Example 6 | 0 | 170 | 5 | 0.000 | 0.000 | 0.001 | o |
| Comparative Example 7 | 10 | 0 | 5 | 0.000 | 0.000 | 0.002 | o |
| Comparative Example 8 | 10 | 35 | 5 | 0.000 | 0.000 | 0.002 | o |
| Comparative Example 9 | 10 | 170 | 5 | 0.000 | 0.000 | 0.002 | o |
| Comparative Example 10 | 5500 | 0 | 5 | 0.024 | 0.040 | 0.053 | × |
| Comparative Example 11 | 5500 | 35 | 5 | 0.028 | 0.087 | 0.103 | × |
| Comparative Example 12 | 5500 | 170 | 5 | 0.013 | 0.034 | 0.057 | × |

The package 200 according to Examples 31 to 56 absorbed a larger amount of oxygen and had a higher oxygen absorbing ability as compared to the package according to Comparative Examples 4 to 12. The package 200 according to Examples 31 to 56 was not tinged, and was therefore good for appearance, while the package according to Comparative Examples 10 to 12 was tinged, and was therefore poor for appearance. As is apparent from each oxygen absorption of the package 200 according to Examples 39 to 41, the package 200 retained an excellent oxygen absorbing ability at any of storage temperatures of 5 to 50°C.

The package 200 according to Examples 34, 35, 37 to 43, 45, 46, 48, 49, 51, 52, 54 and 55, where the content of the oxygen absorption reaction catalyst in the oxygen-absorbing layer 150 was 500 ppm to 5000 ppm inclusive and the content of the oxidation inhibitor was 0 ppm to 120 ppm inclusive, had a larger oxygen absorption on the first day as compared to the package 200 according to other examples and the package according to comparative examples. The package 200 according to Examples 35, 38 to 42, 46, 49, 52 and 55, where the content of the oxygen absorption reaction catalyst in the oxygen-absorbing layer 150 was 500 ppm to 5000 ppm inclusive and the content of the oxidation inhibitor was 5 ppm to 60 ppm inclusive, had a larger oxygen absorption on the third and seventh days as compared to the package 200 according to other examples and the package according to comparative examples. The package 200 according to Examples 49, 52 and 55, where the content of the oxygen absorption reaction catalyst in the oxygen-absorbing layer 150 was 3000 ppm to 5000 ppm inclusive and the content of the oxidation inhibitor was 5 ppm to 60 ppm inclusive, had a still larger oxygen absorption on the third and seventh days as compared to the package 200 according to other examples and the package according to comparative examples.

### (Example 57)

A laminated film 100 and a package 200 were obtained in the same manner as in Example 1 except for the following. The thickness of the seal layer 160 of the laminated film 100 was 10 µm, the thickness of the oxygen-absorbing layer 150 was 30 µm, the thickness of the second adhesive layer 140 was 40 µm, the thickness of the barrier layer 130 was 40 µm, the thickness of the first adhesive layer 120 was 20 µm and the thickness of the outer layer 110 was 90 µm.

### <Properties of laminated film>

The thickness of the obtained laminated film 100 was 0.21 mm as measured by a dial gauge. The tensile strength of the laminated film 100 was 43 N/mm² in the machine direction (MD) of the laminated film 100 and 41 N/mm² in the transverse direction (TD) of the laminated film 100 as measured in accordance with JIS Z 1702. The rupture elongation of the laminated film 100 was 400% in the machine direction (MD) of the laminated film 100 and 360% in the transverse direction (TD) of the laminated film 100 as measured in accordance with JIS Z 1702. The tear strength of the laminated film 100 was 1900 N/cm in the machine direction (MD) of the laminated film 100 and 1800 N/cm in the transverse direction (TD) of the laminated film 100 as measured in accordance with JIS K 6301. The light transmittance of the laminated film 100 was 89.3% as measured in accordance with JIS K 7361. The haze of the laminated film 100 was 2.8% as measured in accordance with JIS K 7136.

### <Measurement of oxygen absorption>

As shown in Fig. 4, a trace oxygen analyzer for food 500 (manufactured by Iijima Electronics Corporation; Model: IS-300) was used to measure the oxygen concentration in the pocket 310 of the package 200 at the elapse of a predetermined number of days after the bottom material 300 and the cap material 400 were heat-sealed to each other, i.e. the package 200 was hermetically sealed. Specifically, with a needle 510 of the trace oxygen analyzer for food 500 stuck into the cap material 400 through an adhesive rubber 520, the oxygen concentration in the package 200 was measured under conditions of storage temperature: 5°C and sampling time: 7 seconds.

As a result of measuring the oxygen concentration in the package 200, the oxygen concentration in the package 200 at the time of heat-sealing the bottom material 300 and the cap material 400 to each other (hereinafter, referred to as "initial oxygen concentration") was 0.131 %. The oxygen concentration in the package 200 at the elapse of 0.125 days (3 hours) was 0.111 %. The oxygen concentration in the package 200 at the elapse of 0.625 days (15 hours) was 0.091%. The oxygen concentration in the package 200 at the elapse of 2 days was 0.038%. The oxygen concentration in the package 200 at the elapse of 3 days was 0.030%. The oxygen concentration in the package 200 at the elapse of 10 days was 0.007%. The oxygen concentration in the package 200 at the elapse of 17 days was 0.009%. The oxygen concentration in the package 200 at the elapse of 24 days was 0.012%. The oxygen concentration in the package 200 at the elapse of 31 days was 0.009%. The oxygen concentration in the package 200 at the elapse of 38 days was 0.012% (see Table 3 below). Fig. 5 is a view graphically showing the values described above.

As a result of calculation based on the measured values of oxygen concentrations described above, the oxygen concentration in the package 200 at the elapse of 0.125 days (3 hours) was 84.7% of the initial oxygen concentration in the package 200. The oxygen concentration in the package 200 at the elapse of 0.625 days (15 hours) was 69.5% of the initial oxygen concentration in the package 200. The oxygen concentration in the package 200 at the elapse of 2 days was 29.0% of the initial oxygen concentration in the package 200. The oxygen concentration in the package 200 at the elapse of 3 days was 22.9% of the initial oxygen concentration in the package 200. The oxygen concentration in the package 200 at the elapse of 10 days was 5.3% of the initial oxygen concentration in the package 200. The oxygen concentration in the package 200 at the elapse of 17 days was 6.9% of the initial oxygen concentration in the package 200. The oxygen concentration in the package 200 at the elapse of 24 days was 9.2% of the initial oxygen concentration in the package 200. The oxygen concentration in the package 200 at the elapse of 31 days was 6.9% of the initial oxygen concentration in the package 200. The oxygen concentration in the package 200 at the elapse of 38 days was 9.2% of the initial oxygen concentration in the package 200 (see Table 3 below).

### (Example 58)

A package 200 was prepared in the same manner as in Example 57 except that a hindered phenol-based oxidation inhibitor (manufactured by BASF Ltd.; Product number: IRGANOX 1010) was added to an adhesive polyolefin-based resin of a second adhesive layer 240 such that the content of the hindered phenol-based oxidation inhibitor was 800 ppm in terms of the weight ratio with respect to the second adhesive layer 240 and the thickness of the second adhesive layer 240 was 20 µm, and the oxygen concentration in the package 200 at the elapse of a predetermined number of days after a bottom material 300 and a cap material 400 were heat-sealed to each other was measured in the same manner as in Example 57. The properties of a laminated film 100 of this example were almost same as the properties of the laminated film 100 of Example 57.

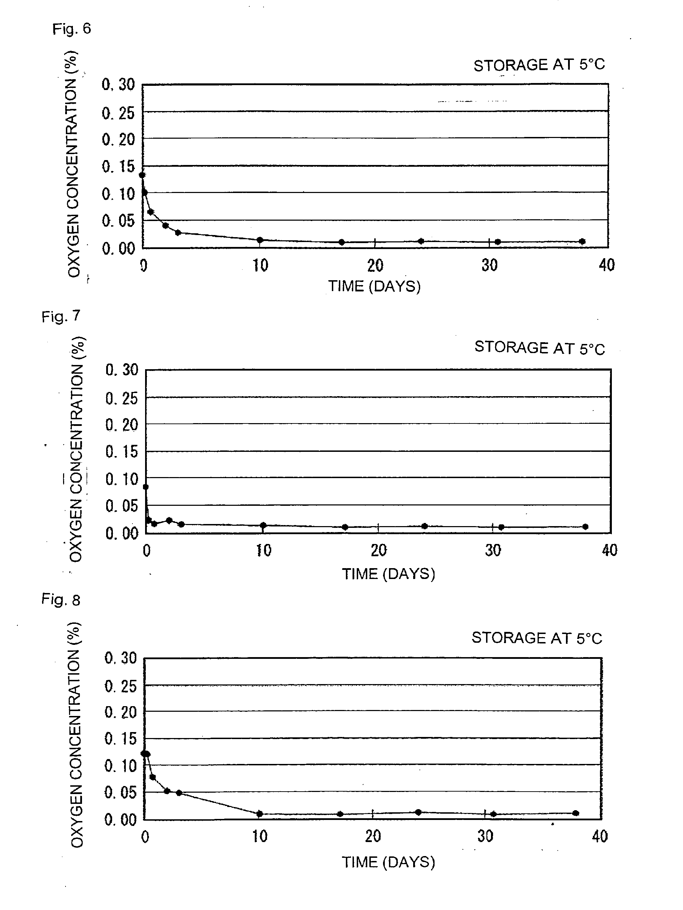

As a result, the initial oxygen concentration in the package 200 was 0.134%. The oxygen concentration in the package 200 at the elapse of 0.125 days (3 hours) was 0.103%. The oxygen concentration in the package 200 at the elapse of 0.625 days (15 hours) was 0.066%. The oxygen concentration in the package 200 at the elapse of 2 days was 0.040%. The oxygen concentration in the package 200 at the elapse of 3 days was 0.028%. The oxygen concentration in the package 200 at the elapse of 10 days was 0.013%. The oxygen concentration in the package 200 at the elapse of 17 days was 0.008%. The oxygen concentration in the package 200 at the elapse of 24 days was 0.011 %. The oxygen concentration in the package 200 at the elapse of 31 days was 0.006%. The oxygen concentration in the package 200 at the elapse of 38 days was 0.011 % (see Table 3 below). Fig. 6 is a view graphically showing the values described above.

As a result of calculation based on the measured values of oxygen concentrations described above, the oxygen concentration in the package 200 at the elapse of 0.125 days (3 hours) was 76.9% of the initial oxygen concentration in the package 200. The oxygen concentration in the package 200 at the elapse of 0.625 days (15 hours) was 49.3% of the initial oxygen concentration in the package 200. The oxygen concentration in the package 200 at the elapse of 2 days was 29.9% of the initial oxygen concentration in the package 200. The oxygen concentration in the package 200 at the elapse of 3 days was 20.9% of the initial oxygen concentration in the package 200. The oxygen concentration in the package 200 at the elapse of 10 days was 9.7% of the initial oxygen concentration in the package 200. The oxygen concentration in the package 200 at the elapse of 17 days was 6.0% of the initial oxygen concentration in the package 200. The oxygen concentration in the package 200 at the elapse of 24 days was 8.2% of the initial oxygen concentration in the package 200. The oxygen concentration in the package 200 at the elapse of 31 days was 4.5% of the initial oxygen concentration in the package 200. The oxygen concentration in the package 200 at the elapse of 38 days was 8.2% of the initial oxygen concentration in the package 200 (see Table 3 below).

### (Example 59)

A package 200 was prepared in the same manner as in Example 57 except that the thickness of a second adhesive layer 240 was 20 µm, and the oxygen concentration in the package 200 was measured after a bottom material 300 and a cap material 400 were heat-sealed to each other in the same manner as in Example 57. The properties of a laminated film 100 of the bottom material 300 of this example were almost same as the properties of the laminated film 100 of Example 57.

As a result, the initial oxygen concentration in the package 200 was 0.087%. The oxygen concentration in the package 200 at the elapse of 0.125 days (3 hours) was 0.024%. The oxygen concentration in the package 200 at the elapse of 0.625 days (15 hours) was 0.017%. The oxygen concentration in the package 200 at the elapse of 2 days was 0.025%. The oxygen concentration in the package 200 at the elapse of 3 days was 0.016%. The oxygen concentration in the package 200 at the elapse of 10 days was 0.011 %. The oxygen concentration in the package 200 at the elapse of 17 days was 0.007%. The oxygen concentration in the package 200 at the elapse of 24 days was 0.010%. The oxygen concentration in the package 200 at the elapse of 31 days was 0.007%. The oxygen concentration in the package 200 at the elapse of 38 days was 0.010% (see Table 3 below). Fig. 7 is a view graphically showing the values described above.

As a result of calculation based on the measured values of oxygen concentrations described above, the oxygen concentration in the package 200 at the elapse of 0.125 days (3 hours) was 27.6% of the initial oxygen concentration in the package 200. The oxygen concentration in the package 200 at the elapse of 0.625 days (15 hours) was 19.5% of the initial oxygen concentration in the package 200. The oxygen concentration in the package 200 at the elapse of 2 days was 28.7% of the initial oxygen concentration in the package 200. The oxygen concentration in the package 200 at the elapse of 3 days was 18.4% of the initial oxygen concentration in the package 200. The oxygen concentration in the package 200 at the elapse of 10 days was 12.6% of the initial oxygen concentration in the package 200. The oxygen concentration in the package 200 at the elapse of 17 days was 8.0% of the initial oxygen concentration in the package 200. The oxygen concentration in the package 200 at the elapse of 24 days was 11.5% of the initial oxygen concentration in the package 200. The oxygen concentration in the package 200 at the elapse of 31 days was 8.0% of the initial oxygen concentration in the package 200. The oxygen concentration in the package 200 at the elapse of 38 days was 11.5% of the initial oxygen concentration in the package 200 (see Table 3 below).

### (Example 60)

A package 200 was prepared in the same manner as in Example 59 except that as a resin forming an oxygen-absorbing layer 150, one obtained by mixing 90% by weight of a base resin and 10% by weight of an unsaturated polyolefin-based oxygen-absorbing resin was prepared, and the oxygen concentration in the package 200 at the elapse of a predetermined number of days after a bottom material 300 and a cap material 400 were heat-sealed to each other was measured in the same manner as in Example 57. The properties of a laminated film 100 of the bottom material 300 of this example were almost same as the properties of the laminated film 100 of Example 57.

As a result, the initial oxygen concentration in the package 200 was 0.124%. The oxygen concentration in the package 200 at the elapse of 0.125 days (3 hours) was 0.123%. The oxygen concentration in the package 200 at the elapse of 0.625 days (15 hours) was 0.079%. The oxygen concentration in the package 200 at the elapse of 2 days was 0.053%. The oxygen concentration in the package 200 at the elapse of 3 days was 0.049%. The oxygen concentration in the package 200 at the elapse of 10 days was 0.009%. The oxygen concentration in the package 200 at the elapse of 17 days was 0.006%. The oxygen concentration in the package 200 at the elapse of 24 days was 0.010%. The oxygen concentration in the package 200 at the elapse of 31 days was 0.006%. The oxygen concentration in the package 200 at the elapse of 38 days was 0.012% (see Table 3 below). Fig. 8 is a view graphically showing the values described above.

As a result of calculation based on the measured values of oxygen concentrations described above, the oxygen concentration in the package 200 at the elapse of 0.125 days (3 hours) was 99.2% of the initial oxygen concentration in the package 200. The oxygen concentration in the package 200 at the elapse of 0.625 days (15 hours) was 63.7% of the initial oxygen concentration in the package 200. The oxygen concentration in the package 200 at the elapse of 2 days was 42.7% of the initial oxygen concentration in the package 200. The oxygen concentration in the package 200 at the elapse of 3 days was 39.5% of the initial oxygen concentration in the package 200. The oxygen concentration in the package 200 at the elapse of 10 days was 7.3% of the initial oxygen concentration in the package 200. The oxygen concentration in the package 200 at the elapse of 17 days was 4.8% of the initial oxygen concentration in the package 200. The oxygen concentration in the package 200 at the elapse of 24 days was 8.1% of the initial oxygen concentration in the package 200. The oxygen concentration in the package 200 at the elapse of 31 days was 4.8% of the initial oxygen concentration in the package 200. The oxygen concentration in the package 200 at the elapse of 38 days was 9.7% of the initial oxygen concentration in the package 200 (see Table 3 below).

### (Comparative Example 13)

### <Preparation of bottom material>

A copolymerized polyester resin (manufactured by Eastman Chemical Japan, Ltd.; Product name: GN 071) was prepared as a resin forming an outer layer. An adhesive polyolefin-based resin (manufactured by Mitsui Chemicals, Incorporated; Product name: SF 740) was prepared as a resin forming a first adhesive layer and a second adhesive layer. An EVOH resin (manufactured by KURARAY CO., LTD.; Product name: J 171B) was prepared as a resin forming a barrier layer. A polyamide-based resin (manufactured by Ube Industries, Ltd.; Product name: 1030B) was prepared as a resin forming an intermediate layer. A LLDPE resin (manufactured by Prime Polymer Co., Ltd.; Product name: 2022L) was prepared as a resin forming a seal layer.

The LDPE resin for the seal layer, the adhesive polyolefin-based resin for the second adhesive layer, the polyamide-based resin for the intermediate layer, the EVOH resin for the barrier layer, the adhesive polyolefin-based resin for the first adhesive layer and the copolymerized polyester resin for the outer layer were co-extruded in this order to prepare a laminated film. In the obtained laminated film, the thickness of the seal layer was 10 µm, the thickness of the second adhesive layer was 10 µm, the thickness of the intermediate layer was 10 µm, the thickness of the barrier layer was 10 µm, the thickness of the first adhesive layer was 10 µm and the thickness of the outer layer was 160 µm.

### <Properties of laminated film>

The thickness of the obtained laminated film was 0.21 mm as measured by a dial gauge. The tensile strength of the laminated film was 69 N/mm² in the machine direction (MD) of the laminated film and 68 N/mm² in the transverse direction (TD) of the laminated film as measured in accordance with JIS Z 1702. The rupture elongation of the laminated film was 420% in the machine direction (MD) of the laminated film and 440% in the transverse direction (TD) of the laminated film as measured in accordance with JIS Z 1702. The tear strength of the laminated film was 2400 N/cm in the machine direction (MD) of the laminated film and 2400 N/cm in the transverse direction (TD) of the laminated film as measured in accordance with JIS K 6301. The light transmittance of the laminated film was 90.5% as measured in accordance with JIS K 7361. The haze of the laminated film was 3.2% as measured in accordance with JIS K 7136.

A package was prepared in the same manner as in Example 57 except that the above-mentioned laminated film was used for the material of a bottom material, and the oxygen concentration in the package at the elapse of a predetermined number of days after a bottom material 300 and a cap material 400 were heat-sealed to each other was measured in the same manner as in Example 57.

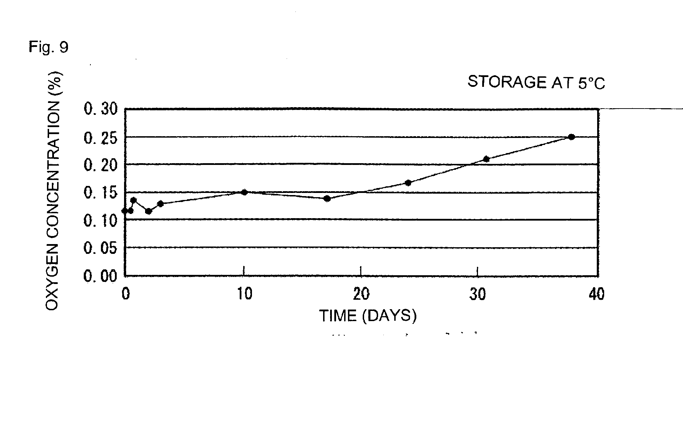

As a result, the initial oxygen concentration in the package was 0.116%. The oxygen concentration in the package 200 at the elapse of 0.125 days (3 hours) was 0.116%. The oxygen concentration in the package 200 at the elapse of 0.625 days (15 hours) was 0.135%. The oxygen concentration in the package 200 at the elapse of 2 days was 0.117%. The oxygen concentration in the package 200 at the elapse of 3 days was 0.128%. The oxygen concentration in the package 200 at the elapse of 10 days was 0.150%. The oxygen concentration in the package 200 at the elapse of 17 days was 0.138%. The oxygen concentration in the package 200 at the elapse of 24 days was 0.168%. The oxygen concentration in the package 200 at the elapse of 31 days was 0.211%. The oxygen concentration in the package 200 at the elapse of 38 days was 0.250% (see Table 3 below). Fig. 9 is a view graphically showing the values described above.

As a result of calculation based on the measured values of oxygen concentrations described above, the oxygen concentration in the package 200 at the elapse of 0.125 days (3 hours) was 100.0% of the initial oxygen concentration in the package 200. The oxygen concentration in the package 200 at the elapse of 0.625 days (15 hours) was 116.4% of the initial oxygen concentration in the package 200. The oxygen concentration in the package 200 at the elapse of 2 days was 100.9% of the initial oxygen concentration in the package 200. The oxygen concentration in the package 200 at the elapse of 3 days was 110.3% of the initial oxygen concentration in the package 200. The oxygen concentration in the package 200 at the elapse of 10 days was 129.3% of the initial oxygen concentration in the package 200. The oxygen concentration in the package 200 at the elapse of 17 days was 119.0% of the initial oxygen concentration in the package 200. The oxygen concentration in the package 200 at the elapse of 24 days was 144.8% of the initial oxygen concentration in the package 200. The oxygen concentration in the package 200 at the elapse of 31 days was 181.9% of the initial oxygen concentration in the package 200. The oxygen concentration in the package 200 at the elapse of 38 days was 215.5% of the initial oxygen concentration in the package 200 (see Table 3 below).

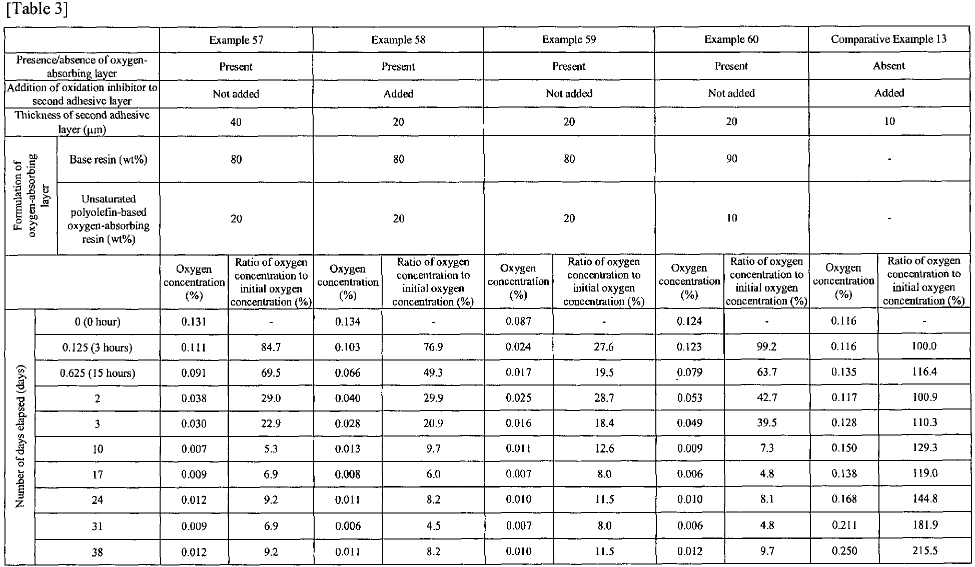

The oxygen concentration in the package 200 according to Examples 57 to 60 remained at a value lower than the initial oxygen concentration for a time period after the elapse of 0.125 days (3 hours) and before the elapse of 38 days. In contrast to this, the oxygen concentration in the package according to Comparative Example 13 remained at a value higher than the initial oxygen concentration for a time period after the elapse of 0.125 days (3 hours) and before the elapse of 38 days. Thus, the package 200 according to Examples 57 to 60 had a higher oxygen absorbing ability as compared to the package according to Comparative Example 13. The package 200 according to Examples 57 to 60 absorbed oxygen under an environment of 5°C.

The oxygen concentration value of the package 200 according to Examples 57 to 60 decreased to a range of 0% to 20% inclusive of the initial oxygen concentration value at the elapse of 10 days. The oxygen concentration value of the package 200 according to Examples 57 to 60 changed within a range of 0% to 20% inclusive of the initial oxygen concentration value for a time period after the elapse of 10 days and before the elapse of 38 days. The oxygen concentration value of the package 200 according to Examples 57 to 60 changed within a range of 0% to 50% inclusive of the initial oxygen concentration value for a time period after the elapse of 2 days and before the elapse of 38 days.

### INDUSTRIAL APPLICABILITY

A laminated film according to the present invention is excellent in oxygen absorbing ability, and therefore can be suitably used as a packaging material for foods, drinks or industrial components (particularly electronic components) for which oxidation is undesirable.

## Claims

1. A laminated film comprising:
an oxygen-absorbing layer containing an oxygen absorber and an oxygen absorption reaction catalyst;
a first adjacent layer laminated in contact with one of the surfaces of the oxygen-absorbing layer; and
a second adjacent layer laminated in contact with the other surface of the oxygen-absorbing layer, wherein
the content of the oxygen absorption reaction catalyst is 100 ppm to 5000 ppm inclusive in terms of the weight ratio with respect to the oxygen-absorbing layer, and
the total content of an oxidation inhibitor of the first adjacent layer and an oxidation inhibitor of the second adjacent layer is 800 ppm or less in terms of the weight ratio with respect to the total amount of the two layers.

2. The laminated film according to claim 1, wherein the content of the oxidation inhibitor of the oxygen-absorbing layer is 170 ppm or less in terms of the weight ratio with respect to the oxygen-absorbing layer.

3. The laminated film according to claim 1 or 2, wherein the laminated film further comprises a barrier layer having a gas barrier property, the first adjacent layer is an adhesive layer that bonds the barrier layer and the oxygen-absorbing layer together, and the second adjacent layer is a seal layer.

4. A laminated film comprising:
an oxygen-absorbing layer containing an oxygen absorber and an oxygen absorption reaction catalyst; and
a barrier layer having a gas barrier property, wherein
the oxygen absorption reaction catalyst is contained in an amount of 100 ppm to 5000 ppm inclusive in terms of the weight ratio with respect to the oxygen-absorbing layer, and
the oxygen-absorbing layer further contains an oxidation inhibitor contained in an amount of 0 ppm to 170 ppm inclusive in terms of the weight ratio with respect to the oxygen-absorbing layer.

5. The laminated film according to claim 4, wherein the barrier layer has an oxygen transmission of 200 ml/(m²·24h·atm) or less.

6. The laminated film according to claim 4 or 5, wherein the oxygen absorption reaction catalyst is contained in an amount of 500 ppm to 5000 ppm inclusive in terms of the weight ratio with respect to the oxygen-absorbing layer, and the oxidation inhibitor is contained in an amount of 0 ppm to 120 ppm inclusive in terms of the weight ratio with respect to the oxygen-absorbing layer.

7. The laminated film according to claim 6, wherein the oxidation inhibitor is contained in an amount of 5 ppm to 60 ppm inclusive in terms of the weight ratio with respect to the oxygen-absorbing layer.

8. The laminated film according to claim 7, wherein the oxygen absorption reaction catalyst is contained in an amount of 3000 ppm to 5000 ppm inclusive in terms of the weight ratio with respect to the oxygen-absorbing layer.

9. The laminated film according to any one of claims 1 to 8, wherein the oxygen absorber is made of an oxygen-absorbing resin.

10. A package comprising the laminated film according to any one of claims 1 to 9.

11. A package comprising:
a cap material; and
a bottom material to which the cap material is sealed, wherein
at least one of the cap material and the bottom material is made of a film that absorbs oxygen, and
the oxygen concentration value in the package decreases to a range of 0% to 50% inclusive of the initial oxygen concentration value in the package at the time when the cap material is sealed to the bottom material, and thereafter changes around the value.

12. The package according to claim 11, wherein the oxygen concentration value in the package decreases to a range of 0% to 50% inclusive of the initial oxygen concentration value in the package at the elapse of 10 days after the cap material is sealed to the bottom material.

13. The package according to claim 11 or 12, wherein the oxygen concentration value in the package changes within a range of 0% to 50% inclusive of the initial oxygen concentration value in the package for 20 days or more.

14. The package according to claim 13, wherein the oxygen concentration value in the package changes within a range of 0% to 50% inclusive of the initial oxygen concentration value in the package for 30 days or more.

15. The package according to any one of claims 11 to 14, wherein the oxygen concentration value in the package decreases to a range of 0% to 20% inclusive of the initial oxygen concentration value in the package, and thereafter changes around the value.

16. The package according to claim 15, wherein the oxygen concentration value in the package decreases to a range of 0% to 20% inclusive of the initial oxygen concentration value in the package at the elapse of 10 days after the cap material is sealed to the bottom material.

17. The package according to any one of claims 11 to 16, wherein the package absorbs oxygen in the package under an environment of 5°C.
